# EUROPEAN PATENT APPLICATION

(11) **EP 2 228 623 A1**
(43) Date of publication of application: **15.09.2010**
(21) Application number: 10156045.6
(22) Date of filing: 10.03.2010
(51) Int. Cl.: G01B 11/24, G01M 11/02

(54) **Three-dimensional shape measuring method and device**

(30) Priority: 11.03.2009 JP 2009058778; 11.03.2009 JP 2009058779; 14.09.2009 JP 2009212382
(71) Applicant: Fujinon Corporation, Saitama (JP)
(72) Inventor: Ge, Zongtao, Saitama-shi Saitama (JP); Tomimizu, Masaaki, Saitama-shi Saitama (JP); Kanda, Hideo, Saitama-shi Saitama (JP); Saito, Takayuki, Saitama-shi Saitama (JP); Koizumi, Noboru, Saitama (JP); Mochitate, Seiji, Saitama-shi Saitama (JP); Takano, Shigeyuki, Saitama-shi Saitama (JP); Iwazaki, Hiroyuki, Saitama-shi Saitama (JP)
(74) Representative: Klunker . Schmitt-Nilson . Hirsch

(57) **Abstract**

A process of measuring a shape while changing the relative posture of an microscopic interferometer to a sample lens which is rotated about a rotation axis is divided into a process of measuring a top surface in a state where the sample lens is supported from a back surface and a process of measuring a back surface in a state where the sample lens is supported from the top surface. By combining first shape information of a flange side surface acquired by the process of measuring the top surface and second shape information of the flange side surface acquired by the process of measuring the back surface, the relative positional relation between the sample top surface and the sample back surface is calculated.

## Description

### BACKGROUND

### Technical Field

The present invention relates to a three-dimensional shape measuring method and a three-dimensional shape measuring device for measuring the shape of a sample such as an aspheric lens, and more particularly, to a three-dimensional shape measuring method and a three-dimensional shape measuring device which can be suitably used to acquire a variety of shape information on a sample, such as the position misalignment of central axes of top and back surfaces and the roundness of a sample side surface, in addition to the shapes of sample top and back surfaces.

### Related Art

In a related art, a method of illuminating a top surface or a back surface (hereinafter, also referred to as "subject surface") of a sample such as an aspheric lens with a spherical wave and specifying the shape of the subject surface on the basis of an interference fringe formed by interference of return light from the subject surface and reference light is known. However, it is difficult to acquire the interference fringe corresponding to the entire area of the subject surface using this method.

Therefore, a method is known which sequentially generates interference fringes corresponding to partial areas in the diameter direction of the subject surface by sequentially moving the relative position of an interferometer to the subject surface in a measurement light axis direction, analyzes the interference fringes to acquire the shapes of the partial areas in the diameter direction of the subject surface, and specifies the shape of the entire subject surface by combining the shapes of the partial areas (see JP-A-62-126305).

A method is also known which sequentially moves an interferometer or a subject surface, enlarges and images interference fringes corresponding to partial areas of the subject surface every movement so as to resolve the fringes, analyzes the interference fringes to acquire the shapes of the partial areas, and specifies the shape of the entire subject surface by combining the shapes of the partial areas (see USP 6,956,657).

On the other hand, a method of specifying the shape of an entire subject surface by measuring a three-dimensional shape using a measurement probe of an optical stylus type is also known (see JP-A-5-87540).

The applicant invented a measurement device for measuring the shape of an aspheric lens or the like with high precision for a short time by combining an interference microscopic optical system and a one-dimensional image sensor (line sensor) and filed the invention with the Japan Patent Office (see Japanese Patent Application No. 2008-266662).

To obtain excellent optical performance, the shapes of aspheric lenses have been complicated. In view of manufacturing cost or productivity, most aspheric lenses with high general usability were formed by molding (hereinafter, the aspheric lens formed by molding is referred to as "molded aspheric lens").

In such molded aspheric lenses, a relative position misalignment (hereinafter, also referred to as "surface misalignment") between the central axes of two lens surfaces of each molded aspheric lens or a relative slope misalignment (hereinafter, also referred to as "surface inclination") between the central axes of two lens surfaces might occur due to the relative position misalignment of shaping molds. Since it is very difficult to completely remove the surface misalignment or the surface inclination in view of the mold mechanism but the surface misalignment or the surface inclination causes an increase in aberration of the molded aspheric lens, it is preferable that the mold is corrected to reduce the surface misalignment or the surface inclination. Accordingly, it is very important to know how the surface inclination or the surface misalignment should occur.

Specifically, in an aspheric lens having a large number of apertures (NA), the surface misalignment of several µm order or the surface inclination of the order of several tens arc-seconds, which is not considered as a problem, is presently considered as a problem. Accordingly, there is a need for a method of measuring the surface misalignment or the surface inclination with high precision.

The surface misalignment or the surface inclination is also considered as a problem in aspheric lenses (hereinafter, referred to as "polished aspheric lens") having a high-precision surface shape by a polishing process, not limited to the molded aspheric lenses.

In expensive polished aspheric lenses requiring very high shape precision, the shape precision is gradually increased by measuring the shape several times in the polishing process and feeding back the measurement results to the polishing process. However, when the surface misalignment or the surface inclination can be easily measured in addition to the surface shape, it is possible to produce a high-performance aspheric lens for a shorter time by feeding back the measurement results.

It is considered that the surface misalignment or the surface inclination can be measured with high precision, when the shapes of two lens surfaces of an aspheric lens can be measured with high precision and the relative positional relation therebetween can be accurately grasped.

However, in the past shape measuring methods as descried above, the shapes of two lens surfaces could be measured with high precision, but the relative positional relation therebetween could hardly be measured accurately. This is because it is necessary to turn over the aspheric lens placed on a sample stage so as to direct the other lens surface to a measurement system after measuring one lens surface and thus the relative positional relation between two lens surfaces becomes unclear.

Accordingly, a method different from the method of measuring the lens surface shape, for example, a method of calculating the wavefront aberration by measuring the transparent wavefront of the aspheric lens and calculating the surface misalignment or the surface inclination from the wavefront aberration, has been suggested for the measurement of the surface misalignment or the surface inclination. However, it is troublesome that another measurement is performed in addition to the measurement of the lens surface shape and much time is taken for the measurement.

### SUMMARY

The invention is contrived in view of the above-mentioned situations. A goal of the invention is to provide a three-dimensional shape measuring method and a device which can measure the shapes of a top surface and a back surface of a sample with high precision while accurately grasping the relative positional relation therebetween.

To accomplish the above-mentioned goal, a three-dimensional shape measuring method and a three-dimensional shape measuring device according to the invention include the following configurations.

A first three-dimensional shape measuring method (hereinafter, referred to as "first method") and a second three-dimensional shape measuring method (hereinafter, referred to as "second method") according to the invention described below have a common goal of measuring the shapes of a top surface and a back surface of a sample with high precision while accurately grasping the relative positional relation therebetween. The substantial difference between the first method and the second method is that in order to acquire a spatial relative positional relation between the top surface shape and the back surface shape of a sample, the first method employs two pieces of measurement data acquired by repeatedly measuring the side surface of the sample from the sample top side and the sample back side but the second method employs two pieces of measurement data acquired by repeatedly measuring the outer circumferential surface shape of a holding jig fixed to the sample from the sample top side and the sample back side. The side surface shape of the sample and the outer circumferential surface shape of the holding jig belong to the same technical concept, in that the relative positional relation between the top surface shape and the back surface shape of the sample are fixed therefor. Accordingly, the first method and the second method have the same or similar technical features. This is true in a first three-dimensional shape measuring device and a second three-dimensional shape measuring device according to the invention described below.

According to a first aspect of the present invention, a three-dimensional shape measuring method of measuring a shape of a sample, which includes a sample top surface having a first curved surface formed in a rotated surface shape centered on a first axis line, a sample back surface having a second curved surface formed in a rotated surface shape centered on a second axis line, and a sample side surface formed in a cylindrical surface shape, using a measurement probe, the method comprises: setting to support the sample from the sample back surface; rotating the sample supported from the sample back surface about a rotation axis in a state where the first axis line is aligned with the rotation axis when the first curved surface is aspheric and in a state where a vertical line of a vertex of the first curved surface with the sample supported from the sample back surface is aligned with the rotation axis when the first curved surface is spheric; scanning the sample top surface and the sample side surface using the measurement probe while changing the relative position of the measurement probe and the rotating sample and acquiring sample top and side surface shape information including shape information of the sample top surface, first shape information of the sample side surface, and relative position information of the sample top surface and the sample side surface; setting to support the sample from the sample top surface; rotating the sample supported from the sample top surface about the rotation axis in a state where the second axis line is aligned with the rotation axis when the second curved surface is aspheric and in a state where a vertical line of a vertex of the second curved surface with the sample supported from the sample top surface is aligned with the rotation axis when the second curved surface is spheric; scanning the sample back surface and the sample side surface using the measurement probe while changing the relative position of the measurement probe and the rotating sample and acquiring sample back and side surface shape information including shape information of the sample back surface, second shape information of the sample side surface, and relative position information of the sample back surface and the sample side surface; and acquiring entire sample shape information including the relative position information of the sample top surface and the sample back surface by combining the first shape information of the sample side surface from the acquiring of the sample top and side surface shape information and the second shape information of the sample side surface form the acquiring of the sample back and side surface shape information.

According to a second aspect of the present invention, a three-dimensional shape measuring method of measuring a shape of a sample, which includes a sample top surface having a first curved surface formed in a rotated surface shape centered on a first axis line and a sample back surface having a second curved surface formed in a rotated surface shape centered on a second axis line, using a measurement probe, the method comprises: fixing the sample to a ring-like holding jig surrounding the sample from the outside in the diameter direction of the sample without changing the relative position of the holding jig and the sample; setting to support the sample, which the holding jig is fixed to, from the sample back surface; rotating the sample supported from the sample back surface about a rotation axis in a state where the first axis line is aligned with the rotation axis when the first curved surface is aspheric and in a state where a vertical line of a vertex of the first curved surface with the sample supported from the sample back surface is aligned with the rotation axis when the first curved surface is spheric; scanning the sample top surface and the outer circumferential surface of the holding jig using the measurement probe while changing the relative position of the rotating sample and the measurement probe and acquiring sample top surface and holding jig outer circumferential surface shape information including shape information of the sample top surface, first shape information of the outer circumferential surface, and relative position information of the sample top surface and the outer circumferential surface; setting to support the sample, which the holding jig is fixed to, from the sample top surface; rotating the sample supported from the sample top surface about the rotation axis in a state where the second axis line is aligned with the rotation axis when the second curved surface is aspheric and in a state where a vertical line of a vertex of the second curved surface with the sample supported from the sample top surface is aligned with the rotation axis when the second curved surface is spheric; scanning the sample back surface and the outer circumferential surface of the holding jig using the measurement probe while changing the relative position of the rotating sample and the measurement probe and acquiring sample back surface and holding jig outer circumferential surface shape information including shape information of the sample back surface, second shape information of the outer circumferential surface, and relative position information of the sample back surface and the outer circumferential surface; and calculating relative position information of the sample top surface and the sample back surface by combining the first shape information and the second shape information, and acquiring sample top and back surface shape information including the relative position information.

According to a third aspect of the present invention, a three-dimensional shape measuring device for measuring a shape of a sample, which includes a sample top surface having a first curved surface formed in a rotated surface shape centered on a first axis line, a sample back surface having a second curved surface formed in a rotated surface shape centered on a second axis line, and a sample side surface formed in a cylindrical surface shape, using a measurement probe, the device comprises: a sample supporting unit which supports the sample from the sample back surface or the sample top surface; a sample rotating unit which rotates the sample supported by the sample supporting unit about a rotation axis; a sample top surface rotation instructing unit which causes the sample rotating unit to rotate the sample supported from the sample back surface by the sample supporting unit in a state where the first axis line is aligned with the rotation axis when the first curved surface is aspheric and in a state where a vertical line of a vertex of the first curved surface with the sample supported from the sample back surface is aligned with the rotation axis when the first curved surface is spheric; a sample top and side surface shape information acquiring unit which scans the sample top surface and the sample side surface using the measurement probe while changing the relative position of the measurement probe and the sample rotated by the sample top surface rotation instructing unit, and acquiring sample top and side surface shape information including shape information of the sample top surface, first shape information of the sample side surface, and relative position information of the sample top surface and the sample side surface; a sample back surface rotation instructing unit which causes the sample rotating unit to rotate the sample supported from the sample top surface by the sample supporting unit in a state where the second axis line is aligned with the rotation axis when the second curved surface is aspheric and in a state where a vertical line of a vertex of the second curved surface with the sample supported from the sample top surface is aligned with the rotation axis when the second curved surface is spheric; a sample back and side surface shape information acquiring unit which scans the sample back surface and the sample side surface using the measurement probe while changing the relative position of the measurement probe and the sample rotated by the sample back surface rotation instructing unit, and acquiring sample back and side surface shape information including shape information of the sample back surface, second shape information of the sample side surface, and relative position information of the sample back surface and the sample side surface; and an entire sample shape information acquiring unit which acquires entire sample shape information including the relative position information of the sample top surface and the sample back surface by combining the first shape information of the sample side surface acquired by the sample top and side surface shape information acquiring unit and the second shape information of the sample side surface acquired by the sample back and side surface shape information acquiring unit.

According to a fourth aspect of the present invention, the measurement probe includes an interference microscopic optical system applying low-coherence measurement light so as to be concentrated on the sample along a measurement light axis and combining the return light of the measurement light with reference light to acquire interference light, and wherein the measurement probe includes: an imaging unit which images an interference fringe formed by the interference light; a relative position changing unit which changes the relative position of the interference microscopic optical system to the sample; and a rotational position detecting unit which detects a rotational position of the sample, which is rotated by the sample rotating unit, about the rotation axis.

According to a fifth aspect of the present invention, the sample top and side surface shape information acquiring unit includes: a sample top and side surface posture adjusting unit in the interference microscopic optical system which causes the relative position changing unit to change sequentially a relative posture of the interference microscopic optical system and the sample which is rotated by the sample top surface rotation instructing unit, so that a position of an intersection point of the measurement light axis with the sample top surface is moved in the diameter direction of the sample top surface and the measurement light axis perpendicularly intersects a tangent plane of the sample top surface at the position of the intersection point every movement and so that the measurement light axis is moved on the sample side surface and a position of an intersection point of the measurement light axis with the sample side surface perpendicularly intersects a tangent plane of the sample side surface; a sample top and side surface interference fringe acquiring unit which applies the measurement light to the sample from the interference microscopic optical system of which the relative posture is sequentially changed by the sample top and side surface posture adjusting unit, imaging a top and side surface rotational position interference fringe, which is formed by the interference of the reference light with the return light of the measurement light from the sample top surface or the sample side surface, corresponding to an area of an intersection portion of the measurement light axis and the sample top surface or the sample side surface for each of a plurality of top and side surface rotational positions of the sample, and acquiring image data of the top and side surface rotational position interference fringes; and a sample top and side surface shape analyzing unit which acquires the sample top and side surface shape information on the basis of the top and side surface rotational position interference fringes and detection data of the rotational position by the rotational position detecting unit and adjustment data of the relative position by the sample top and side surface posture adjusting unit at the points of time of imaging the top and side surface rotational position interference fringes.

According to a sixth aspect of the present invention, the sample back and side surface shape information acquiring unit includes: a sample back and side surface posture adjusting unit in the interference microscopic optical system which causes the relative position changing unit to change sequentially a relative posture of the interference microscopic optical system and the sample which is rotated by the sample back surface rotation instructing unit, so that a position of an intersection point of the measurement light axis with the sample back surface is moved in the diameter direction of the sample back surface and the measurement light axis perpendicularly intersects a tangent plane of the sample back surface at the position of the intersection point every movement and so that the measurement light axis is moved on the sample side surface and a position of an intersection point of the measurement light axis with the sample side surface perpendicularly intersects a tangent plane of the sample side surface; a sample back and side surface interference fringe acquiring unit which applies the measurement light to the sample from the interference microscopic optical system of which the relative posture is sequentially changed by the sample back and side surface posture adjusting unit, imaging a top and side surface rotational position interference fringe, which is formed by the interference of the reference light with the return light of the measurement light from the sample back surface or the sample side surface, corresponding to an area of an intersection portion of the measurement light axis and the sample back surface or the sample side surface for each of a plurality of back and side surface rotational positions of the sample, and acquiring image data of the back and side surface rotational position interference fringes; and a sample back and side surface shape analyzing unit which acquires the sample back and side surface shape information on the basis of the back and side surface rotational position interference fringes and detection data of the rotational position by the rotational position detecting unit and adjustment data of the relative position by the sample back and side surface posture adjusting unit at the points of time of imaging the back and side surface rotational position interference fringes.

According to a seventh aspect of the present invention, the three-dimensional shape measuring device further comprises an axis misalignment analyzing unit which calculates an amount of a relative position misalignment and an amount of a relative slope misalignment of the first axis line and the second axis line on the basis of the entire sample shape information.

According to an eighth aspect of the present invention, the three-dimensional shape measuring device further comprises a sample side surface analyzing unit which calculates a roundness at a section of the sample side surface on the basis of the entire sample shape information.

According to a ninth aspect of the present invention, the sample side surface analyzing unit calculates a cylindrical roundness of the sample side surface on the basis of the entire sample shape information.

According to a tenth aspect of the present invention, a three-dimensional shape measuring device for measuring a shape of a sample, which includes a sample top surface having a first curved surface formed in a rotated surface shape centered on a first axis line and a sample back surface having a second curved surface formed in a rotated surface shape centered on a second axis line, using a measurement probe, the device comprises: a holding jig which is formed in a ring shape surrounding the sample from the outside in the diameter direction of the sample and fixed to the sample without changing the relative position to the sample; a sample supporting unit which supports the sample, which the holding jig is fixed to, from the sample back surface or the sample top surface; a sample rotating unit which rotates the sample supported by the sample supporting unit about a rotation axis; a sample top surface rotation instructing unit which causes the sample rotating unit to rotate the sample supported from the sample back surface by the sample supporting unit in a state where the first axis line is aligned with the rotation axis when the first curved surface is aspheric and in a state where a vertical line of a vertex of the first curved surface with the sample supported from the sample back surface is aligned with the rotation axis when the first curved surface is spheric; an information acquiring unit for a sample top surface and holding jig outer circumferential surface shape which scans the sample top surface and the outer circumferential surface of the holding jig using the measurement probe while changing the relative position of the sample rotated by the sample top surface rotation instructing unit and the measurement probe, and acquiring sample top surface and holding jig outer circumferential surface shape information including shape information of the sample top surface, first shape information of the outer circumferential surface, and relative position information of the sample top surface and the outer circumferential surface; a sample back surface rotation instructing unit which causes the sample rotating unit to rotate the sample supported from the sample top surface by the sample supporting unit in a state where the second axis line is aligned with the rotation axis when the second curved surface is aspheric and in a state where a vertical line of a vertex of the second curved surface with the sample supported from the sample top surface is aligned with the rotation axis when the second curved surface is spheric; a sample back surface and holding jig outer circumferential surface shape information acquiring unit which scans the sample back surface and the outer circumferential surface of the holding jig using the measurement probe while changing the relative position of the sample rotated by the sample back surface rotation instructing unit and the measurement probe, and acquiring sample back surface and holding jig outer circumferential surface shape information including shape information of the sample back surface, second shape information of the outer circumferential surface, and relative position information of the sample back surface and the outer circumferential surface; and a sample top and back surface shape information acquiring unit which calculates relative position information of the sample top surface and the sample back surface by combining the first shape information and the second shape information, and acquiring sample top and back surface shape information including the relative position information.

According to a eleventh aspect of the present invention, the measurement probe includes an interference microscopic optical system applying low-coherence measurement light so as to be concentrated on the sample along a measurement light axis and combining the return light of the measurement light with reference light to acquire interference light, and wherein the measurement probe includes: an imaging unit which images an interference fringe formed by the interference light; a relative position changing unit which changes the relative position of the interference microscopic optical system to the sample; and a rotational position detecting unit which detects a rotational position of the sample, which is rotated by the sample rotating unit, about the rotation axis.

According to a twelfth aspect of the present invention, the sample top surface and holding jig outer circumferential surface shape information acquiring unit includes: a sample top surface and holding jig outer circumferential surface posture adjusting unit in the interference microscopic optical system which causes the relative position changing unit to change sequentially a relative posture of the interference microscopic optical system and the sample rotated by the sample top surface rotation instructing unit, so that a position of an intersection point of the measurement light axis with the sample top surface is moved in the diameter direction of the sample top surface and the measurement light axis perpendicularly intersects a tangent plane of the sample top surface at the position of the intersection point every movement and so that the measurement light axis is moved on the outer circumferential surface of the holding jig and a position of an intersection point of the measurement light axis with the outer circumferential surface perpendicularly intersects a tangent plane of the outer circumferential surface; a sample top surface and holding jig outer circumferential surface interference fringe acquiring unit which applies the measurement light to the sample from the interference microscopic optical system of which the relative posture is sequentially changed by the sample top surface and holding jig outer circumferential surface posture adjusting unit, and causing the imaging unit to image a top surface and outer circumferential surface rotational position interference fringe, which is formed by the interference of the reference light with the return light of the measurement light from the sample top surface or the outer circumferential surface, corresponding to an area of an intersection portion of the measurement light axis and the sample top surface or the outer circumferential surface for each of a plurality of top surface and outer circumferential surface rotational positions of the sample; and a sample top surface and holding jig outer circumferential surface shape analyzing unit which acquires the sample top surface and holding jig outer circumferential surface shape information on the basis of the top surface and outer circumferential surface rotational position interference fringes and detection data of the rotational position by the rotational position detecting unit and adjustment data of the relative position by the sample top surface and holding jig outer circumferential surface posture adjusting unit at the points of time of imaging the top surface and holding jig outer circumferential surface rotational position interference fringes.

According to a thirteenth aspect of the present invention, the sample back surface and holding jig outer circumferential surface shape information acquiring unit includes: a sample back surface and holding jig outer circumferential surface posture adjusting unit in the interference microscopic optical system which causing the relative position changing unit sequentially changing a relative posture of the interference microscopic optical system and the sample, which is rotated by the sample back surface rotation instructing unit, so that a position of an intersection point of the measurement light axis with the sample back surface is moved in the diameter direction of the sample back surface and the measurement light axis perpendicularly intersects a tangent plane of the sample back surface at the position of the intersection point every movement and so that the measurement light axis is moved on the outer circumferential surface of the holding jig and a position of an intersection point of the measurement light axis with the outer circumferential surface perpendicularly intersects a tangent plane of the outer circumferential surface; a sample back surface and holding jig outer circumferential surface interference fringe acquiring unit which applies the measurement light to the sample from the interference microscopic optical system of which the relative posture is sequentially changed by the sample back surface and holding jig outer circumferential surface posture adjusting unit, and causing the imaging unit to image a back surface and outer circumferential surface rotational position interference fringe, which is formed by the interference of the reference light with the return light of the measurement light from the sample back surface or the outer circumferential surface, corresponding to an area of an intersection portion of the measurement light axis and the sample back surface or the outer circumferential surface for each of a plurality of back surface and outer circumferential surface rotational positions of the sample; and a sample back surface and holding jig outer circumferential surface shape analyzing unit which acquires the sample back surface and holding jig outer circumferential surface shape information on the basis of the back surface and outer circumferential surface rotational position interference fringes and detection data of the rotational position by the rotational position detecting unit and adjustment data of the relative position by the sample back surface and holding jig outer circumferential surface posture adjusting unit at the points of time of imaging the back surface and holding jig outer circumferential surface rotational position interference fringes.

According to a fourteenth aspect of the present invention, the three-dimensional shape measuring device further comprises an axis misalignment analyzing unit which calculates an amount of relative position misalignment and an amount of relative slope misalignment of the first axis line and the second axis line on the basis of the sample top and back surface shape information.

According to a fifteenth aspect of the present invention, the imaging unit includes a one-dimensional image sensor as an imaging device.

According to a sixteenth aspect of the present invention, the relative position changing unit includes a tilting unit which tilts the interference microscopic optical system in a space.

The "ring shape" includes a C shape having a slit in a part of the circumference.

The three-dimensional shape measuring method and device according to the invention have the following operational advantages from the above-mentioned features.

That is, in the first three-dimensional shape measuring method and device according to the invention, the shape of the sample which is supported from the sample back surface and rotated about the rotation axis is measured while changing the relative position of the measurement probe and the sample, and the shape information of the sample side surface (first shape information) and the relative position information of the sample top surface and the sample side surface are acquired together in addition to the shape information of the sample top surface. Similarly, the shape of the sample which is supported from the sample top surface and rotated about the rotation axis is measured while changing the relative position of the measurement probe and the sample, and the shape information of the sample side surface (second shape information) and the relative position information of the sample back surface and the sample side surface are acquired together in addition to the shape information of the sample back surface.

By combining the first shape information and the second shape information of the sample side surface, the entire sample shape information including the relative position information of the sample top surface and the sample back surface is acquired.

The rotation axis is aligned with the first axis line of the sample top surface or the vertical line at the vertex of the first curved surface (the relative position of the sample and the rotation axis is not changed) while the sample top surface and the sample side surface are being measured. Accordingly, it is possible to accurately acquire the relative position of the sample top surface and the sample side surface on the basis of the position of the rotation axis. Similarly, the rotation axis is aligned with the second axis line of the sample back surface or the vertical line at the vertex of the second curved surface while the sample back surface and the sample side surface are being measured. Accordingly, it is possible to accurately acquire the relative positional relation between the sample back surface and the sample side surface on the basis of the position of the rotation axis.

The shape of the sample side surface is not variable when it is measured along with the sample top surface and it is measured along with the sample back surface. Accordingly, the first shape information and the second shape information of the sample side surface should be equal to each other in a common coordinate system. Therefore, by combining the first shape information and the second shape information, it is possible to accurately acquire the relative positional relation between the sample top surface and the sample back surface.

Accordingly, in the first three-dimensional shape measuring method and device according to the invention, it is possible to measure the shapes of the top surface and the back surface of a sample while accurately grasping the relative positional relation therebetween.

In the second three-dimensional shape measuring method and device according to the invention, the shape of the sample to which the holding jig is fixed and which is supported from the sample back surface and rotated about the rotation axis is measured while changing the relative position of the measurement probe and the sample, and the shape information of the outer circumferential surface of the holding jig (first shape information) and the relative position information of the sample top surface and the outer circumferential surface of the holding jig are acquired together in addition to the shape information of the sample top surface. Similarly, the shape of the sample which is supported from the sample top surface and rotated about the rotation axis is measured while changing the relative position of the measurement probe and the sample, and the shape information of the outer circumferential surface of the holding jig (second shape information) and the relative position information of the sample back surface and the outer circumferential surface of the holding jig are acquired together in addition to the shape information of the sample back surface.

By combining the first shape information and the second shape information of the outer circumferential surface of the holding jig, the sample top and back surface shape information including the relative position information of the sample top surface and the sample back surface is acquired.

The rotation axis is aligned with the first axis line of the sample top surface or the vertical line at the vertex of the first curved surface (the relative position of the sample and the rotation axis is not changed) while the sample top surface and the outer circumferential surface of the holding jig are being measured. Accordingly, it is possible to accurately acquire the relative position of the sample top surface and the outer circumferential surface of the holding jig on the basis of the position of the rotation axis. Similarly, the rotation axis is aligned with the second axis line of the sample back surface or the vertical line at the vertex of the second curved surface while the sample top surface and the outer circumferential surface of the holding jig are being measured. Accordingly, it is possible to accurately acquire the relative position of the sample back surface and the outer circumferential surface of the holding jig on the basis of the position of the rotation axis.

The shape of the outer circumferential surface of the holding jig is not variable when it is measured along with the sample top surface and it is measured along with the sample back surface. Accordingly, the first shape information and the second shape information of the outer circumferential surface of the holding jig should be equal to each other in a common coordinate system. Therefore, by combining the first shape information and the second shape information, it is possible to accurately acquire the relative positional relation between the sample top surface and the sample back surface.

Accordingly, in the second three-dimensional shape measuring method and device according to the invention, it is possible to measure the shapes of the top surface and the back surface of a sample while accurately grasping the relative positional relation therebetween.

### BRIEF DESCRIPTION OF THE DRAWINGS

Fig. 1 is a diagram schematically illustrating the configuration of a three-dimensional shape measuring device according to a first embodiment of the invention.
Fig. 2 is a diagram schematically illustrating the configuration of an optical system of a microscopic interferometer shown in Fig.1.
Fig. 3 is a block diagram illustrating the configuration of an analysis controller shown in Fig.1.
Fig. 4 is a block diagram illustrating the configuration of a sample top surface rotation instructing unit shown in Fig. 3.
Fig. 5 is a block diagram illustrating the configuration of a sample back surface rotation instructing unit shown in Fig. 3.
Fig. 6A is a sectional view and Fig. 6B is a front view. Figs. 6A and 6B are diagrams illustrating the configuration of a sample lens according to the first embodiment.
Fig. 7 is a diagram schematically illustrating the roundness of a sample side surface.
Fig. 8 is a diagram schematically illustrating the cylindrical roundness of the sample side surface.
Fig. 9 is a diagram schematically illustrating an adjustment jig.
Fig. 10 is a diagram illustrating a state where the sample lens according to the first embodiment is supported from the back side.
Fig. 11 is a diagram schematically illustrating a process of measuring the top surface of the sample lens according to the first embodiment.
Fig. 12 is a diagram illustrating a state where the sample lens according to the first embodiment is supported from the front side.
Fig. 13 is a diagram schematically illustrating a process of measuring the back surface of the sample lens according to the first embodiment.
Fig. 14 is a diagram schematically illustrating the configuration of a three-dimensional shape measuring device according to a second embodiment of the invention.
Fig. 15 is a diagram schematically illustrating the configuration of an optical system of a microscopic interferometer shown in Fig. 14.
Fig. 16 is a block diagram illustrating the configuration of an analysis controller shown in Fig.14.
Fig. 17 is a block diagram illustrating the configuration of a sample top surface rotation instructing unit shown in Fig. 16.
Fig. 18 is a block diagram illustrating the configuration of a sample back surface rotation instructing unit shown in Fig. 16.
Fig. 19 is a diagram illustrating the configuration of a sample lens according to the second embodiment (where Fig. 6A is a sectional view and Fig. 6B is a front view).
Fig. 20 is a diagram schematically illustrating a holding jig.
Fig. 21 is a diagram schematically illustrating a state where the holding jig is fixed to the sample lens.
Fig. 22 is a diagram illustrating a state where the sample lens according to the second embodiment is supported from the back side.
Fig. 23 is a diagram schematically illustrating a process of measuring the top surface of the sample lens according to the second embodiment.
Fig. 24 is a diagram illustrating a state where the sample lens according to the second embodiment is supported from the front side.
Fig. 25 is a diagram schematically illustrating a process of measuring the back surface of the sample lens according to the second embodiment.

### DETAILED DESCRIPTION

Hereinafter, embodiments of the invention will be described in detail with reference to the accompanying drawings. The drawings used to describe the embodiments are schematic diagrams, do not show detailed shapes and structures, but show properly changed sizes and distances of elements. First Embodiment

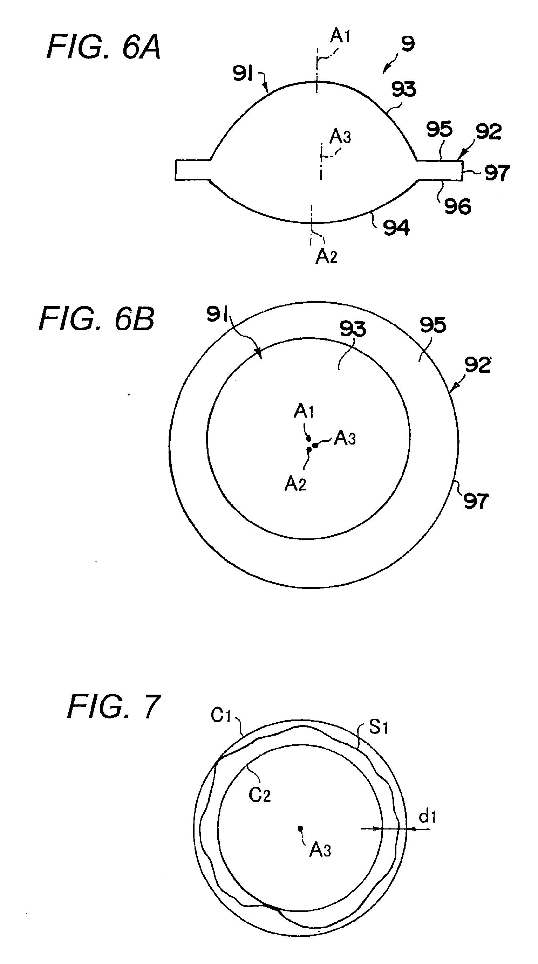

The configuration of a sample lens 9 as a sample and items to be measured in the first embodiment will be first described with reference to Figs. 6 to 8.

As shown in Figs. 6A and 6B, the sample lens 9 includes a lens portion 91 and a sharp flange portion 92 formed in the outer circumference of the lens portion 91. In design, the lens portion 91 includes a first curved surface 93 (which is aspheric) formed in a rotated surface shape centered on a first axis line A₁ and a second curved surface 94 (which is spheric) formed in a rotated surface shape centered on a second axis line A₂. The flange portion 92 includes a flange top surface 95 and a flange back surface 96 which are formed respectively in a ring shape and a flange side surface 97 formed in a cylindrical shape. In design, the first axis line A₁ is an outer-diameter central axis of the first curved surface 93 and the second axis line A₂ is an outer-diameter central axis of the second curved surface 94.

In the sample lens 9 according to the first embodiment, a sample top surface is constructed by the first curved surface 93 and the flange top surface 95 and a sample back surface is constructed by the second curved surface 94 and the flange back surface 96. A sample side surface is constructed by the flange side surface 97. In the first embodiment, the sample top surface and the sample back surface are defined as described above, but the top surface of the sample lens 9 shown in Fig. 6A may be defined as the sample back surface (in this case, the curved surface denoted by reference numeral 93 is called second curved surface, the portion denoted by reference numeral 95 is called flange back surface, and the axis line denoted by reference sign A₁ is called second axis line) and the back surface thereof may be defined as the sample top surface (in this case, the curved surface denoted by reference numeral 94 is called first curved surface, the portion denoted by reference numeral 96 is called flange top surface, and the axis line denoted by reference sign A₂ is called first axis line).

The sample lens 9 is designed so that the first axis line A₁ and the second axis line A₂ are aligned with a third axis line A₃ (serving as the outer-diameter central axis of the flange portion 93 and the rotation center of the flange side surface 97) in the drawing, but the axis lines may not be aligned with each other due to production errors. For the purpose of easy understanding the drawing, an error of the axis misalignment is expressed great, but the axis misalignment has a small error of a light wavelength order or less.

In the first embodiment, various items to be measured, such as the surface inclination or the surface misalignment resulting from the production errors, are defined as follows. The below definitions are conveniently introduced to clarify the below description and other definitions may be considered.

Surface Inclination: The relative slope angle between the first axis line A₁ and the second axis line A₂ (the angle formed by the first axis line A₁ and the second axis line A₂; the angle formed by direction vectors of the axis lines when the first axis line A₁ and the second axis lineA₂ do not intersect each other) is defined as the surface inclination of the sample lens 9 (where the magnitude of the slope angle is called an amount of surface inclination and the slope direction of the first axis line A₁ about the second axis lineA₂ is called a surface inclination direction).

Surface Misalignment: The relative position misalignment of the first axis line A₁ and the second axis lineA₂ is defined as the surface misalignment of the sample lens 9 (where the shortest length of the common vertical line between the first axis line A₁ and the second axis lineA₂ is called an amount of surface misalignment and the extending direction of the common vertical line is called a surface misalignment direction).

Surface Eccentricity: The relative position misalignment of the first axis line A₁ and the third axis line A₃ is defined as the surface eccentricity of the first curved surface 93 (where the shortest length of the common vertical line between the first axis line A₁ and the third axis line A₃ is called an amount of surface eccentricity of the first curved surface 93 and the extending direction of the common vertical line is called a surface eccentricity direction of the first curved surface 93). Similarly, the relative position misalignment of the second axis line A₂ and the third axis line A₃ is defined as the surface eccentricity of the second curved surface 94 (where the shortest length of the common vertical line between the second axis line A₂ and the third axis line A₃ is called an amount of surface eccentricity of the second curved surface 94 and the extending direction of the common vertical line is called a surface eccentricity direction of the second curved surface 94).

Roundness of Sample Side Surface: When a plane perpendicular to the third axis line A₃ and intersected by the flange side surface 97 is established, the flange side surface 97 is cut all over the circumference by the plane, and a measured shape S₁ of the flange side surface 97 at the cut position (the shape of the intersection line of the plane and the flange side surface 97 (see Fig. 7)) is interposed between two coaxial virtual circles C₁ and C₂, then the difference d₁ in radius between two virtual circles C₁ and C₂ in which the gap between two virtual circles C₁ and C₂ is the minimum is defined as the roundness of the sample side surface at a predetermined section (a section formed by the plane).

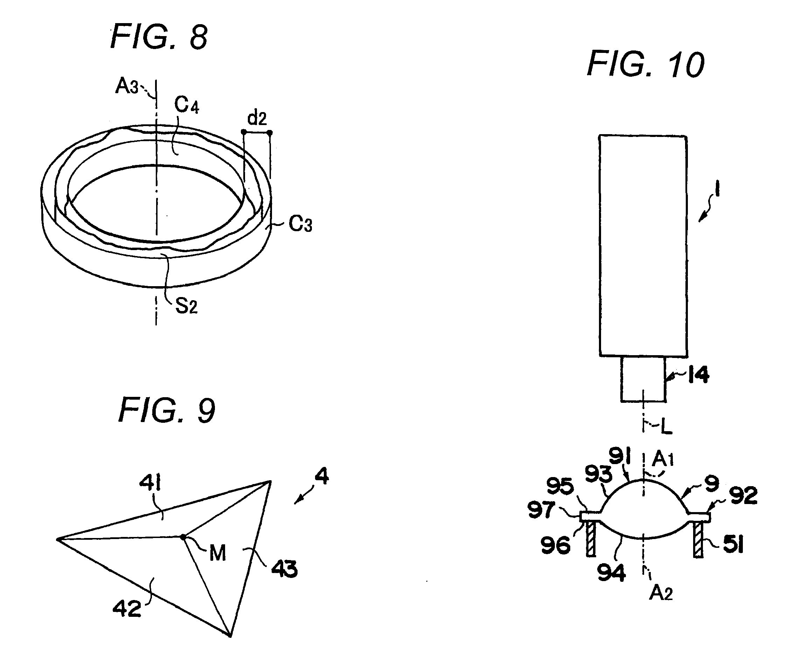

Cylindrical Roundness of Sample Side Surface: When a measured shape S₂ of the entire flange side surface 97 (see Fig. 8) is interposed between two virtual circles C₃ and C₄, having the third axis line A₃ as a common central axis, the difference d₂ in radius between two virtual circles C₃ and C₄ in which the gap between two virtual circles C₃ and C₄ is the minimum is defined as the cylindrical roundness of the sample side surface.

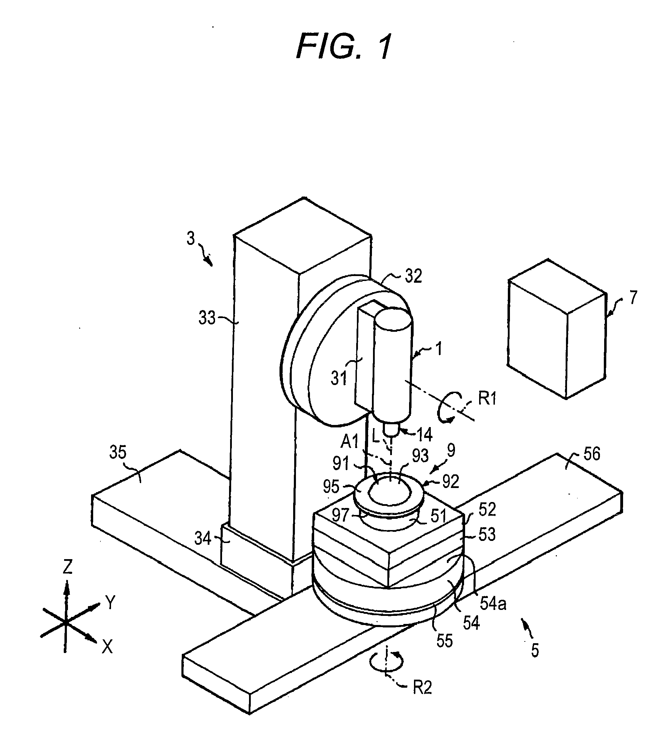

A three-dimensional shape measuring device according to the first embodiment will be described now with reference to Figs. 1 to 5.

As shown in Fig.1, the three-dimensional shape measuring device according to the first embodiment includes a microscopic interferometer 1, a measurement system alignment unit 3 adjusting the posture or position of the microscopic interferometer 1, a sample alignment unit 5 adjusting the posture or position of the sample lens 9, and an analysis controller 7.

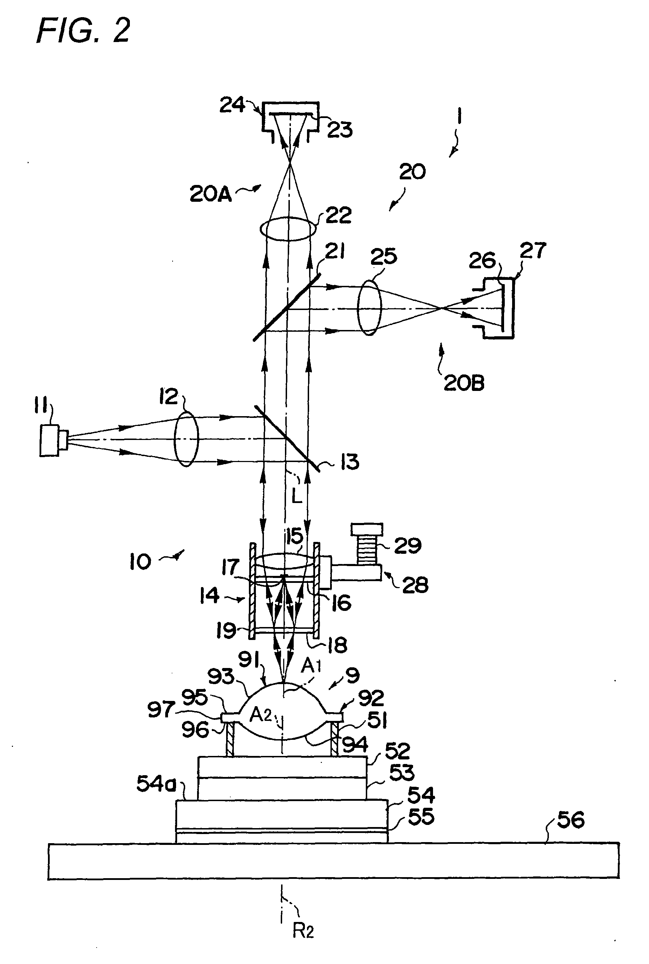

As shown in Fig. 2, the microscopic interferometer 1 includes a measurement light illuminating system 10 and an imaging system 20. The measurement light illuminating system 10 includes a light source unit 11, which is formed of an LED or an SLD, outputting a low-coherence light flux as the measurement light, a collimator lens 12 collimating the measurement light output from the light source unit 11, a light flux dividing optical element 13 reflecting the measurement light from the collimator lens 12 to the downside in the drawing, and an interference microscopic optical system 14 as a measurement probe applying the measurement light from the light flux dividing optical element 13 along a measurement light axis L so as to be convergent on the sample lens 9 and combining the return light of the measurement light with reference light to acquire interference light.

The interference microscopic optical system 14 includes a convergence lens 15 constituting a mirror-type objective system and converting the measurement light from the light flux dividing optical element 13 from parallel light to convergent light, a transparent flat panel 16 disposed below the convergence lens 15 in the drawing, a reflecting element 17 disposed above the transparent flat panel 16 in the drawing, and a transflective element 18 disposed in an optical path of the measurement light from the convergence lens 15, which are all disposed inside a barrel 19. The transflective element 18 is configured to reflect a part of the measurement light from the convergence lens 15 and to transmit and output the other to the sample lens 9. The light reflected by the transflective element 18 is collected by the reflecting element 17, is reflected by the reflecting element 17, and is incident on the transflective element 18 again. Apart of the incident light is reflected by the transflective element 18 and serves as the reference light. The reference light is combined with the return light of the measurement light, which has been applied to the sample lens 9, from the collected area.

The interference microscopic optical system 14 is supported by a fringe scan adapter 28 having a piezoelectric element 29, is subjected to a fine adjustment of a distance from the sample lens 9 at the time of measurement, and is finely movable in the direction of the measurement light axis L at the time of performing the fringe scan measurement.

On the other hand, the imaging system 20 includes a light flux dividing optical element 21 dividing the interference light passing through the light flux dividing optical element 13 and traveling up in the drawing from the interference microscopic optical system 14, a first imaging system 20Ataking an image mainly when the sample lens 9 is being rotated, and a second imaging system 20B taking an image mainly when the sample lens 9 is stopped.

The first imaging system 20A includes an imaging lens 22 concentrating the interference light passing through the light flux dividing optical element 21 and traveling up in the drawing and a first imaging camera 24 having a one-dimensional image sensor 23 such as a CCD or a CMOS and acquires image data of an interference fringe formed on the one-dimensional image sensor 23 by the first imaging lens 22. On the contrary, the second imaging system 20B includes an imaging lens 25 concentrating the interference light reflected to the right side in the drawing by the light flux dividing optical element 21 and a second imaging camera 27 having a two-dimensional image sensor 26 such as a CCD or a CMOS and acquires image data of an interference fringe formed on the two-dimensional image sensor 26 by the second imaging lens 25.

As shown in Fig.1, the measurement system alignment unit 3 includes a bracket 31 fixed to the microscopic interferometer 1, an interferometer tilting stage 32 (the tilting unit in the first embodiment) supporting the microscopic interferometer 1 with the bracket 31 interposed therebetween so as to be tilted about a rotation axis R₁ extending in the X axis direction in the drawing, an interferometer Z-moving stage 33 moving the microscopic interferometer 1 along with the interferometer tilting stage 32 in the Z axis direction in the drawing, an interferometer Y-tilting stage 34 tilting the microscopic interferometer 1 along with the interferometer Z-moving stage 33 about the Y axis in the drawing, and an interferometer X-moving stage 35 moving the microscopic interferometer 1 along with the interferometer Y-moving stage 34 in the X axis direction in the drawing.

As shown in Fig.1, the sample alignment unit 5 includes a sample stage 51 (the sample supporting unit in the first embodiment) supporting the sample lens 9 from the top surface or the back surface with a vacuum attractive force, a sample XY-tilting stage 52 tilting the sample lens 9 about the X axis and the Y axis in the drawing with the sample stage 51 interposed therebetween, a sample XY-moving stage 53 moving the sample lens 9 along with the sample XY-tilting stage 52 in the X axis direction and the Y axis direction in the drawing, a sample rotating stage 54 (the sample rotating unit in the first embodiment) rotating the sample lens 9 along with the sample XY-moving stage 53 about a rotation axis R₂ extending in the Z axis direction in the drawing, a rotation encoder 55 which is mounted on the sample rotation stage 54 and which detects a rotation angle of the sample rotating stage 54 (the rotational position of the sample lens 9 rotated by the sample rotating stage 54 about the rotation axis R₂), and a sample Y-moving stage 56 moving the sample lens 9 along with the sample rotating stage 55 in the Y axis direction in the drawing.

In the first embodiment, the relative position changing unit is constructed by the interferometer tilting stage 32, the interferometer Z-moving stage 33, the interferometer Y-tilting stage 34, the interferometer X-moving stage 35, and the sample Y-moving stage 56, and the rotational position detecting unit is constructed by the rotation encoder 55.

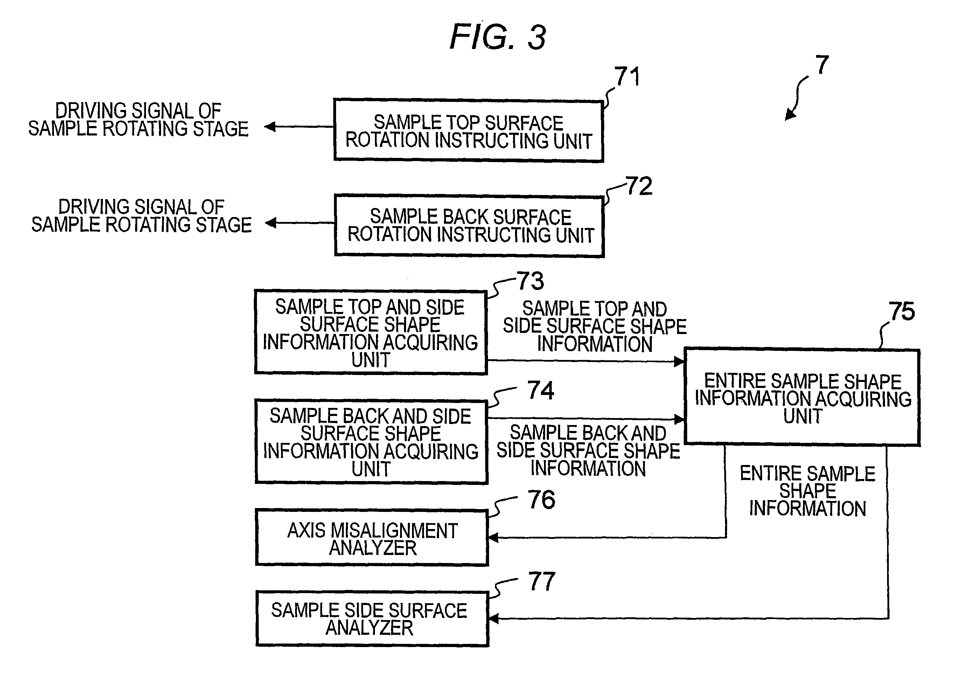

The analysis controller 7 calculates shape data of the sample lens 9 on the basis of the image data of the interference fringe acquired by the imaging system 20 or controls the driving of the stage and the like in the measurement system alignment unit 3 and the sample alignment unit 5, and includes, as shown in Fig. 3, a sample top surface rotation instructing unit 71, a sample back surface rotation instructing unit 72, a sample top and side surface shape information acquiring unit 73, a sample back and side surface shape information acquiring unit 74, an entire sample shape information acquiring unit 75, an axis misalignment analyzer 76, and a sample side surface analyzer 77, which are constructed by a CPU built in the analysis controller 7 or a storage unit such as a hard disk and programs stored in the storage unit.

The sample top surface rotation instructing unit 71 allows the sample rotating stage 54 to rotate the sample lens 9, which is supported from the back surface by the sample stage 51, in a state where the first axis line A₁ is aligned with the rotation axis R₂ of the sample rotating stage 54.

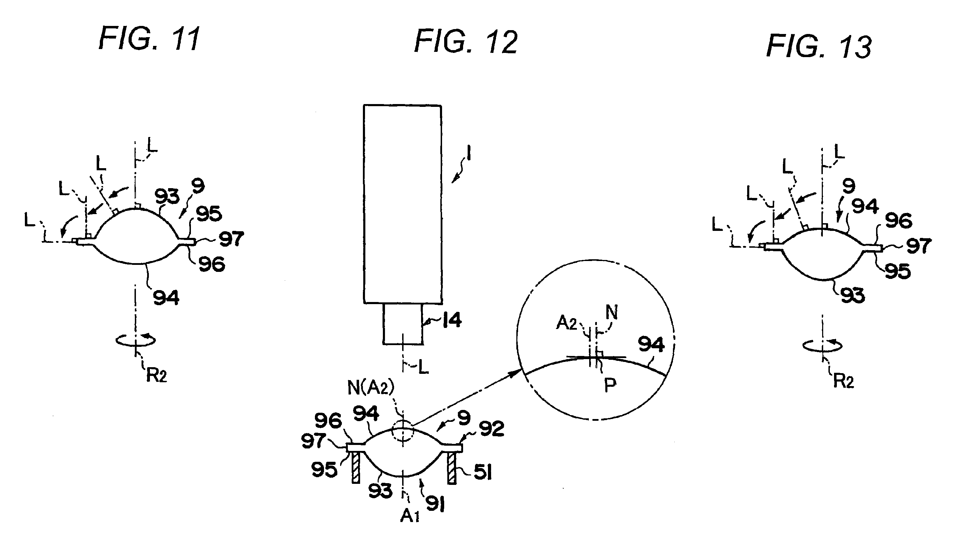

The sample back surface rotation instructing unit 72 allows the sample rotating stage 54 to rotate the sample lens 9, which is supported from the top surface by the sample stage 51, in a state where a vertical line N (see Fig. 12) at a vertex P of the second curved surface 94 with the sample lens supported from the top surface is aligned with the rotation axis R₂ of the sample rotating stage 54.

The sample top and side surface shape information acquiring unit 73 causes the interference microscopic optical system 14 to scan the sample top surface (the first curved surface 93 and the flange top surface 95) and the sample side surface (the flange side surface 97) while changing the relative position of the interference microscopic optical system 14 and the sample lens 9 rotated by the sample top surface rotation instructing unit 71, and acquires the sample top and side surface shape information including the shape information of the sample top surface, the first shape information of the sample side surface, and the relative position information of the sample top surface and the sample side surface.

The sample back and side surface shape information acquiring unit 74 causes the interference microscopic optical system 14 to scan the sample back surface (the second curved surface 94 and the flange back surface 96) and the sample side surface (the flange side surface 97) while changing the relative position of the interference microscopic optical system 14 and the sample lens 9 rotated by the sample back surface rotation instructing unit 72, and acquires the sample back and side surface shape information including the shape information of the sample back surface, the second shape information of the sample side surface, and the relative position information of the sample back surface and the sample side surface.

The entire sample shape information acquiring unit 75 acquires the entire sample shape information including the relative position information of the sample top surface and the sample back surface, by combining the first shape information of the sample side surface acquired by the sample top and side surface shape information acquiring unit 73 and the second shape information of the sample side surface acquired by the sample back and side surface shape information acquiring unit 74 with each other.

The axis misalignment analyzer 76 calculates the relative position misalignment (surface misalignment) and the relative slope misalignment (surface inclination) of the first axis line A₁ and the second axis line A₂ on the basis of the entire sample shape information.

The sample side surface analyzer 77 calculates the roundness of the sample side surface at a predetermined section thereof and the cylindrical roundness of the sample side surface on the basis of the entire sample shape information.

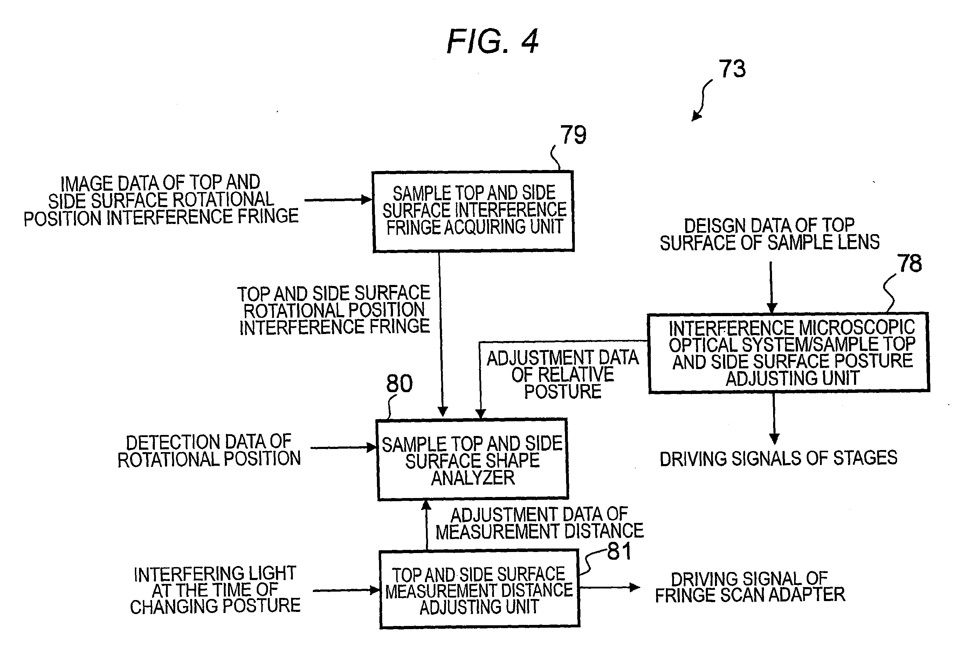

As shown in Fig. 4, the sample top and side surface shape information acquiring unit 73 includes an interference microscopic optical system/sample top and side surface posture adjusting unit 78, a sample top and side surface interference fringe acquiring unit 79, a sample top and side surface shape analyzer 80, and a top and side surface measurement distance adjusting unit 81, which are constructed by a CPU built in the analysis controller 7 or a storage unit such as a hard disk and programs stored in the storage unit.

The interference microscopic optical system/sample top and side surface posture adjusting unit 78 causes the relative position changing unit (the interferometer tilting stage 32, the interferometer Z-moving stage 33, and the interferometer Y-tilting stage 34, the interferometer X-moving stage 35, and the sample Y-moving stage 56) to sequentially change the relative posture of the interference microscopic optical system 14 and the sample lens 9, so that the position of an intersection point between the measurement light axis L and the sample top surface is moved in the diameter direction of the sample top surface and the measurement light axis L perpendicularly intersects a tangent plane of the sample top surface at the position of the intersection point and so that the measurement light axis L is moved in the sample side surface and the measurement light axis L perpendicularly intersects a tangent plane of the sample side surface at the position of the intersection point with the sample side surface, on the basis of the design data of the sample top surface (the first curved surface 93 and the flange top surface 95) of the sample lens 9 rotated by the sample top surface rotation instructing unit 71.

The sample top and side surface interference fringe acquiring unit 79 causes the interference microscopic optical system 14, the relative posture of which is sequentially changed by the interference microscopic optical system/sample top and side surface posture adjusting unit 78, to sequentially apply the measurement light to the sample lens 9, causes the one-dimensional image sensor 23 of the first imaging camera 24 to image the top and side surface rotational position interference fringe, which is formed by the interference of the reference light with the return light of the measurement light from the sample top surface or the sample side surface, corresponding to the area of each intersection portion of the measurement light axis L with the sample top surface or the sample side surface for each of plural top and side surface rotation positions of the sample lens 9, and acquires the image data of the top and side surface position interference fringes.

The top and side surface measurement distance adjusting unit 81 finely adjusts the measurement distance between the interference microscopic optical system 14 and the sample lens 9, so that the concentrating point of the measurement light is located in the sample top surface or the sample side surface, on the basis of the light intensity of the interference light (interference light at the time of changing the posture) taken by the two-dimensional image sensor 26 of the second imaging camera 27 whenever the relative position is changed by the interference microscopic optical system/sample top and side surface posture adjusting unit 78.

The sample top and side surface shape analyzer 80 acquires the sample top and side surface shape information on the basis of the sample top and side surface rotational position interference fringes, the detection data of the rotational position by the rotation encoder 55 at the points of time when the top and side surface rotational position interference fringes are imaged, the adjustment data of the relative posture by the interference microscopic optical system/sample top and side surface posture adjusting unit 78, and the adjustment data of the measurement distance by the top and side surface measurement distance adjusting unit 81.

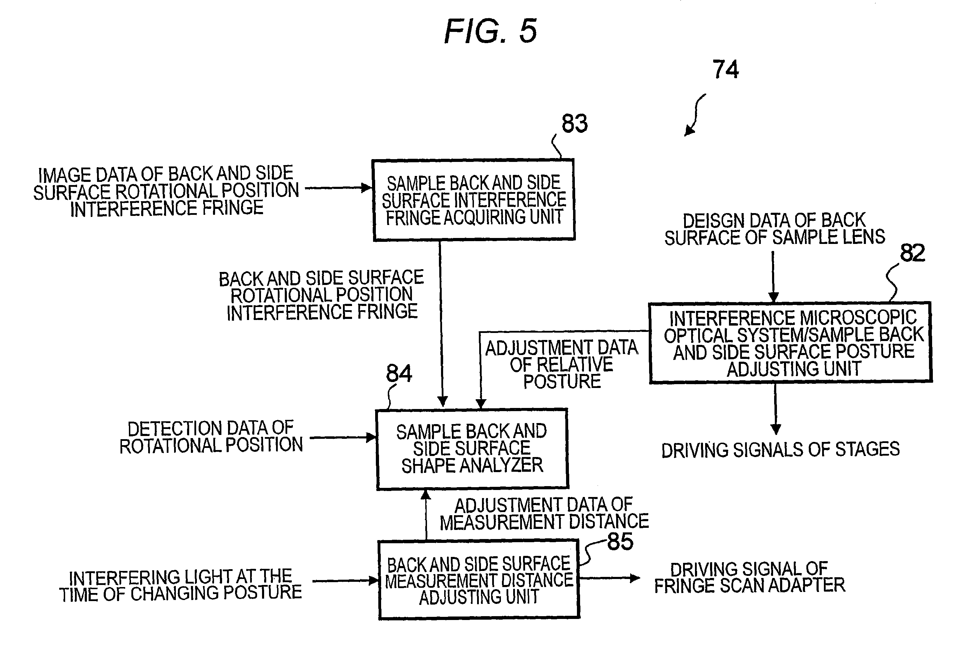

As shown in Fig. 5, the sample back and side surface shape information acquiring unit 74 includes an interference microscopic optical system/sample back and side surface posture adjusting unit 82, a sample back and side surface interference fringe acquiring unit 83, a sample back and side surface shape analyzer 84, and a back and side surface measurement distance adjusting unit 85, which are constructed by a CPU built in the analysis controller 7 or a storage unit such as a hard disk and programs stored in the storage unit.

The interference microscopic optical system/sample back and side surface posture adjusting unit 82 causes the relative position changing unit (the interferometer tilting stage 32, the interferometer Z-moving stage 33, the interferometer Y-tilting stage 34, the interferometer X-moving stage 35, and the sample Y-moving stage 56) to sequentially change the relative posture of the interference microscopic optical system 14 and the sample lens 9, so that the position of an intersection point between the measurement light axis L and the sample back surface is moved in the diameter direction of the sample back surface and the measurement light axis L perpendicularly intersects a tangent plane of the sample back surface at the position of the intersection point and so that the measurement light axis L is moved in the sample side surface and the measurement light axis L perpendicularly intersects a tangent plane of the sample side surface at the position of the intersection point with the sample side surface, on the basis of the design data of the sample back surface (the second curved surface 94 and the flange top surface 95) of the sample lens 9 rotated by the sample back surface rotation instructing unit 72.

The sample back and side surface interference fringe acquiring unit 83 causes the interference microscopic optical system 14, the relative posture of which is sequentially changed by the interference microscopic optical system/sample back and side surface posture adjusting unit 82, to sequentially apply the measurement light to the sample lens 9, causes the one-dimensional image sensor 23 of the first imaging camera 24 to image the back and side surface rotational position interference fringe, which is formed by the interference of the reference light with the return light of the measurement light from the sample back surface or the sample side surface, corresponding to the area of each intersection portion of the measurement light axis L with the sample back surface or the sample side surface for each of plural back and side surface rotation positions of the sample lens 9, and acquires the image data of the back and side surface position interference fringes.

The back and side surface measurement distance adjusting unit 85 finely adjusts the measurement distance between the interference microscopic optical system 14 and the sample lens 9, so that the concentrating point of the measurement light is located in the sample back surface or the sample side surface, on the basis of the light intensity of the interference light (interference light at the time of changing the posture) taken by the two-dimensional image sensor 26 of the second imaging camera 27 whenever the relative position is changed by the interference microscopic optical system/sample back and side surface posture adjusting unit 82.

The sample back and side surface shape analyzer 84 acquires the sample back and side surface shape information on the basis of the sample back and side surface rotational position interference fringes, the detection data of the rotational position by the rotation encoder 55 at the points of time when the back and side surface rotational position interference fringes are imaged, the adjustment data of the relative posture by the interference microscopic optical system/sample back and side surface posture adjusting unit 82, and the adjustment data of the measurement distance by the back and side surface measurement distance adjusting unit 85.

The three-dimensional shape measuring method according to the first embodiment of the invention will be described now. The three-dimensional shape measuring method according to the first embodiment is performed using the three-dimensional shape measuring device according to the first embodiment.

### Initial Adjustment of Alignment Unit

The initial adjustment of the measurement system alignment unit 3 and the sample alignment unit 5 will be first described, which is carried out before the measurement. The initial adjustment is carried out to align the rotation axis R₂ of the sample rotating stage 54 with the measurement light axis L of the microscopic interferometer 1 with high precision before placing the sample lens 9 on the sample stage 51.
(U1) First, the relative position of the microscopic interferometer 1 and the sample rotating stage 54 is adjusted using the interferometer Z-moving stage 33, the interferometer X-moving stage 35, and the sample Y-moving stage 56 so that the measurement light from the microscopic interferometer 1 is concentrated and applied onto a rotating disk surface 54a (which is smooth with high precision) of the sample rotating stage 54 shown in Fig. 1 in a state where the sample rotating stage 54 is stopped. The adjustment of the relative position is carried out by causing an operator to manually adjust the relative position of the microscopic interferometer 1 and the rotating disk surface 54a while checking the relative position, but may be automatically carried out by constructing the device so as to recognize the relative position of the microscopic interferometer 1 and the rotating disk surface 54a.
(U2) Then, the measurement light is applied to the rotating disk surface 54a from the microscopic interferometer 1 of which the relative position has been adjusted, the interference fringe formed by the interference of the return light with the reference light is imaged using the two-dimensional image sensor 26 of the second imaging camera 27 shown in Fig. 2, and the slope of the microscopic interferometer 1 is adjusted using the interferometer tilting stage 32 and the interferometer Y-tilting stage 34 shown in Fig. 1 so that the imaged interference fringe is in a null pattern state. Accordingly, the measurement light axis L is parallel to the rotation axis R₂.
(U3) Subsequently, a parallel flat panel of which the top and back surfaces are smoothed with high precision is placed on the sample stage 51, and the relative position of the microscopic interferometer 1 and the sample stage 51 is adjusted using the interferometer Z-moving stage 33, the interferometer X-moving stage 35, and the sample Y-moving stage 56 so that the measurement light from the microscopic interferometer 1 is concentrated and applied onto the parallel flat panel surface (the surface facing the microscopic interferometer 1).
(U4) The measurement light is applied to the parallel flat panel surface from the microscopic interferometer 1 of which the relative position has been adjusted, the interference fringe formed by the interference of the return light with the reference light is imaged using the two-dimensional image sensor 26 of the second imaging camera 27, and the slope of the parallel flat panel on the sample stage 51 is adjusted using the sample XY-tilting stage 52 shown in Fig. 1 so that the imaged interference fringe is in the null pattern state. Accordingly, the parallel flat panel surface is perpendicular to the rotation axis R₂ and the measurement light axis L.
(U5) As shown in Fig. 9, the adjustment jig 4 is placed and fixed onto the parallel flat panel surface. The adjustment jig 4 includes three reflecting planes 41 to 43 having different slopes and the position of an intersection point M of three reflecting planes 41 to 43 is calculated with high precision from three interference fringe images, which are observed at the time of applying the measurement light to three reflecting planes 41 to 43, corresponding to the three reflecting planes 41 to 43 (see Japanese Patent Application Publication No. 2007-315282).
(U6) The adjustment jig 4 is rotated about the rotation axis R₂ using the sample rotating stage 54, the measurement light is applied to the rotating adjustment jig 4 from the microscopic interferometer 1, and three interference fringe images, which are formed by causing the return light from the three reflecting planes 41 to 43 with the reference light, corresponding to the three reflecting planes 41 to 43 are imaged using the two-dimensional image sensor 26 of the second imaging camera 27 at each of plural positions of the adjustment jig 4.
(U7) A rotation locus of the intersection point M is calculated from the three interference fringe images imaged at each of the plural rotational positions, and the position of the rotation axis R₂ is specified with respect to the rotation locus. The relative position of the microscopic interferometer 1 and the sample rotating stage 54 is adjusted using the interferometer X-moving stage 35 and the sample Y-moving stage 56 shown in Fig. 1 so that the measurement light axis L is aligned with the rotation axis R₂ of which the position has been specified. Accordingly, the initial adjustment of the measurement system alignment unit 3 and the sample alignment unit 5 is completed.

### Measurement of Sample Top and Side Surface Shape

The top surface (the area including the first curved surface 93, the flange top surface 95, and the flange side surface 97) of the sample lens 9 is measured in the following flow of processes.
(V1) First, the sample lens 9 is supported from the back surface using the sample stage 51 so that the first curved surface 93 faces the microscopic interferometer 1 (the sample back surface supporting step; see Fig. 10). In the stage where the sample lens 9 is placed and supported on the sample stage 51, the first axis line A₁ of the first curved surface 93 is located in the vicinity of the rotation axis R₂ (and the measurement light axis L aligned thereto), but it cannot said that the first axis line is exactly aligned with the rotation axis R₂. Accordingly, the adjustment for exactly aligning the first axis line A₁ with the rotation axis R₂ is carried out in the following flow of processes.
   (a) The interference microscopic optical system 14 is sequentially moved in the direction of the measurement light axis L using the fringe scan adapter 28, the measurement light is applied to the first curved surface 93 every movement, and the interference light of the return light reflected from the first curved surface 93 with the reference light is taken using the two-dimensional image sensor 26 of the second imaging camera 27. The moving distance of the interference microscopic optical system 14 is automatically controlled by the top and side surface measurement distance adjusting unit 81.
   (b) The light intensity of the interference light taken every movement is measured by the top and side surface measurement distance adjusting unit, and the interference microscopic optical system 14 is disposed at the optimal position (the position where the measurement light is concentrated on the first curved surface 93) where the light intensity of the interference light is the maximum.
   (c) The measurement light is applied to the first curved surface 93 from the interference microscopic optical system 14 located at the optimal position, and the interference fringe image formed by causing the return light to interfere with the reference light is imaged using the two-dimensional image sensor 26 of the second imaging camera 27.
   (d) The shape information of a partial area (an area corresponding to the interference fringe image) of the first curved surface 93 is calculated from the imaged interference fringe images.
   (e) The calculated shape information is combined with the design data of the first curved surface 93 of the sample lens 9, the relative slope misalignment between the first axis line A₁ and the rotation axis R₂ (the measurement light axis L) is calculated from the combination result, and the slope of the sample lens 9 on the sample stage 51 is adjusted using the sample XY-tilting stage 52 so that the first axis A₁ is parallel to the rotation axis R₂.
   (f) After the adjustment of the slope, the measurement light is applied to the first curved surface 93 of the sample lens 9 from the interference microscopic optical system 14 again and the interference fringe image formed by causing the return light to interfere with the reference light is imaged using the two-dimensional image sensor 26 of the second imaging camera 27.
   (g) The relative position misalignment between the first axis line A₁ and the rotation axis R₂ (the measurement axis line L) is calculated from the imaged interference fringe images (the interference fringe images of a coaxial ring shape centered on the position of the intersection point between the first axis line A₁ and the first curved surface 93), and the position of the sample lens 9 on the sample stage 51 is adjusted using the sample XY-moving stage 53 so that the first axis line A₁ is aligned with the rotation axis R₂. Accordingly, the first axis line A₁ is aligned with the rotation axis R₂.
   The relative posture of the interference microscopic optical system 14 to the sample lens 9 in the state where the first axis line A₁ is aligned with the rotation axis R₂ is stored in the interference microscopic optical system/sample top and side surface posture adjusting unit 78 as the reference posture at the time of measuring the sample top surface, and is used to change the relative posture of the interference microscopic optical system 14 to the sample lens 9.
(V2) Subsequently to the process of (V1), the sample lens 9 is rotated about the rotation axis R₂ using the sample rotating stage 54 in the state where the first axis line A₁ of the first curved surface 93 is aligned with the rotation axis R₂ of the sample rotating stage 54 (the sample top surface rotating step). The sample rotating stage 54 is controlled by the sample top surface rotation instructing unit 71. At this time, the rotational velocity can be set to any value, but is set to, for example, one rotation per 0.1 sec in the first embodiment.
(V3) Then, the interference microscopic optical system 14 is caused to sequentially scan the first curved surface 93, the flange top surface 95, and the flange side surface 97 of the rotated sample lens 9 while changing the relative position of the sample lens 9 and the interference microscopic optical system 14 using the interferometer tilting stage 32, the interferometer Z-moving stage 33, and the sample Y-moving stage 56 shown in Fig.1, and the sample top and side surface shape information including the shape information of the sample top surface (the first curved surface 93 and the flange top surface 95), the shape information (first shape information) of the sample side surface (the flange side surface 97), and the relative position information of the sample top surface and the sample side surface is acquired in a predetermined coordinate system (hereinafter, referred to as "first coordinate system") (the sample top and side surface shape information acquiring step). The sample top and side surface shape information acquiring step is carried out in the following flow of processes.
   (a) The interferometer tilting stage 32, the interferometer Z-moving stage 33, and the sample Y-moving stage 56 are caused to sequentially change the relative posture of the interference microscopic optical system 14 to the sample lens 9, so that the position of the intersection point on the rotated sample lens 9 between the measurement light axis L of the interference microscopic optical system 14 and the sample top surface (the first curved surface 93 and the flange top surface 95) is moved in the diameter direction of the first curved surface 93 and the flange top surface 95 and the measurement light axis L perpendicularly intersects the tangent plane of the first curved surface 93 and the flange top surface 95 at the position of the intersection point and so that the measurement light axis L is moved in the sample side surface (the flange side surface 97) and the measurement light axis L perpendicularly intersects the tangent plane of the flange side surface 97 at the position of the intersection point (see Fig. 11). In the first embodiment, the entire area of the first curved surface 93, the flange top surface 95, and the flange side surface 97 is measured. The interferometer tilting stage 32, the interferometer Z-moving stage 33, and the sample Y-moving stage 56 are driven by the interference microscopic optical system/sample top and side surface posture adjusting unit 78 on the basis of the design data of the top surface of the sample lens 9. Whenever the relative posture is changed, as described in (a) and (b) of (V1), the measurement distance of the interference microscopic optical system 14 is adjusted by the top and side surface measurement distance adjusting unit 81 and the adjustment data of the measurement distance is sequentially input to the sample top and side surface shape analyzer 80 along with the adjustment data of the relative posture by the interference microscopic optical system/sample top and side surface posture adjusting unit 78.
   (b) The measurement light is applied to the sample lens 9 from the interference microscopic optical system 14 of which the relative posture is sequentially changed, the top and side surface rotational position interference fringe (the interference fringe corresponding to the area of each intersection of the measurement light axis L and the sample top surface) formed by the interference of the reference light with the return light from the first curved surface 93, the flange top surface 95, and the flange side surface 97 of the sample lens 9 is imaged by the one-dimensional image sensor 23 of the first imaging camera 24 for each of the plural rotational positions of the sample top and side surfaces, and the image data is acquired. The top and side surface rotational position interference fringes are imaged in accordance with the instruction from the sample top and side surface interference fringe acquiring unit 79 and the image data is sequentially input to the sample top and side surface shape analyzer 80. The number of imaging operations can be set to any value, but the imaging operation is carried out 3600 times per 0.1 sec (once whenever the sample lens 9 is rotated by 0.1 degree) for which the sample lens 9 is rotated once in the first embodiment. Whenever the top and side surface rotational position interference fringe is imaged, the rotation angle of the sample lens 9 at the imaging time is detected by the rotation encoder 55 and the detection data of the rotation position is sequentially input to the sample top and side surface shape analyzer 80.
   (c) The sample top and side surface shape information is calculated by the sample top and side surface shape analyzer 80 on the basis of the acquired top and side surface rotational position interference fringes, the detection data of the rotation position at the times of imaging the top and side surface rotational position interference fringes, the adjustment data of the relative posture by the interference microscopic optical system/sample top and side surface posture adjusting unit 78, and the adjustment data of the measurement distance by the top and side surface measurement distance adjusting unit 81.

### Measurement of Sample Back and Side Surface Shape

The back surface (the area including the second curved surface 94, the flange back surface 96, and the flange side surface 97) of the sample lens 9 is measured in the following flow of processes.
(W1) First, the relative position of the microscopic interferometer 1 and the sample rotating stage 54 is returned to the state where the initial adjustment of the measurement system alignment unit 3 and the sample alignment unit 5 is completed.
(W2) Then, the sample lens 9 is supported from the top surface using the sample stage 51 so that the second curved surface 94 faces the microscopic interferometer 1 (the sample top surface supporting step; see Fig. 12). The second curved surface 94 is spheric. Accordingly, in the stage where the sample lens 9 is placed and supported on the sample stage 51, a vertex P exists in the second curved surface 94 in the state where it is supported from the top surface and a vertical line N (parallel to the measurement light axis L) perpendicularly intersecting the tangent plane of the second curved surface 94 can be set in the vertex P. When the sample lens 9 is formed as the design data, the vertical line N is aligned with the second axis line A₂ of the second curved surface 94. However, when the surface eccentricity exists in the second curved surface 94, the lines are not aligned with each other. Unlike the first axis line A₁ of the first curved surface 93 which is aspheric, the position of the second axis line A₂ can be specified only after the entire shape of the sample lens 9 is measured. In the stage where the sample lens 9 is placed and supported on the sample stage 51, the second axis line is located in the vicinity of the vertical line N of the second curved surface 94 and the rotation axis R₂ (and the measurement light axis L aligned therewith), but it cannot be said that it is exactly aligned with the rotation axis R₂. Accordingly, the adjustment for exactly aligning the vertical line N with the rotation axis R₂ is carried out in the following flow of processes.
   (a) The interference microscopic optical system 14 is sequentially moved in the direction of the measurement light axis L using the fringe scan adapter 28, the measurement light is applied to the second curved surface 94 every movement, and the interference light of the return light reflected from the second curved surface 94 with the reference light is taken using the two-dimensional image sensor 26 of the second imaging camera 27. The moving distance of the interference microscopic optical system 14 is automatically controlled by the back and side surface measurement distance adjusting unit 85.
   (b) The light intensity of the interference light taken every movement is measured by the back and side surface measurement distance adjusting unit 85, and the interference microscopic optical system 14 is disposed at the optimal position (the position where the measurement light is concentrated on the second curved surface 94) where the light intensity of the interference light is the maximum.
   (c) The measurement light is applied to the second curved surface 94 from the interference microscopic optical system 14 located at the optimal position, and the interference fringe image formed by causing the return light to interfere with the reference light is imaged using the two-dimensional image sensor 26 of the second imaging camera 27.
   (d) The relative position misalignment between the vertical line N and the rotation axis R₂ (the measurement light axis L) is calculated from the imaged interference fringe images (the interference fringe images of a coaxial ring shape centered on the vertical line N), and the position of the sample lens 9 on the sample stage 51 is adjusted using the sample XY-moving stage 53 so that the vertical line N is aligned with the rotation axis R₂. Accordingly, the vertical line N is aligned with the rotation axis R₂.
   The relative posture of the interference microscopic optical system 14 to the sample lens 9 in the state where the vertical line N is aligned with the rotation axis R₂ is stored in the interference microscopic optical system/sample back and side surface posture adjusting unit 82 as the reference posture at the time of measuring the sample back surface, and is used to change the relative posture of the interference microscopic optical system 14 to the sample lens 9.
(W3) Subsequently to the process of (W2), the sample lens 9 is rotated about the rotation axis R₂ using the sample rotating stage 54 in the state where the vertical line N of the second curved surface 94 is aligned with the rotation axis R₂ of the sample rotating stage 54 (the sample back surface rotating step). The sample rotating stage 54 is controlled by the sample back surface rotation instructing unit 72. At this time, the rotational velocity can be set to any value, but is set to, for example, one rotation per 0.1 sec in the first embodiment.
(W4) Then, the interference microscopic optical system 14 is caused to sequentially scan the second curved surface 94, the flange back surface 96, and the flange side surface 97 of the rotated sample lens 9 while changing the relative position of the sample lens 9 and the interference microscopic optical system 14 using the interferometer tilting stage 32, the interferometer Z-moving stage 33, and the sample Y-moving stage 56 shown in Fig. 1, and the sample back and side surface shape information including the shape information of the sample back surface (the second curved surface 94 and the flange back surface 96), the shape information (second shape information) of the sample side surface (the flange side surface 97), and the relative position information of the sample back surface and the sample side surface is acquired in a coordinate system (hereinafter, referred to as "second coordinate system") other than the first coordinate system (the sample back and side surface shape information acquiring step). The sample back and side surface shape information acquiring step is carried out in the following flow of processes.
   (a) The interferometer tilting stage 32, the interferometer Z-moving stage 33, and the sample Y-moving stage 56 are caused to sequentially change the relative posture of the interference microscopic optical system 14 to the sample lens 9, so that the position of the intersection point on the rotated sample lens 9 between the measurement light axis L of the interference microscopic optical system 14 and the sample back surface (the second curved surface 94 and the flange back surface 96) is moved in the diameter direction of the second curved surface 94 and the flange back surface 96 and the measurement light axis L perpendicularly intersects the tangent plane of the second curved surface 94 and the flange back surface 96 at the position of the intersection point every movement and so that the measurement light axis L is moved in the sample side surface (the flange side surface 97) and the measurement light axis L perpendicularly intersects the tangent plane of the flange side surface 97 at the position of the intersection point (see Fig. 13). In the first embodiment, the entire area of the second curved surface 94, the flange back surface 96, and the flange side surface 97 is measured. The interferometer tilting stage 32, the interferometer Z-moving stage 33, and the sample Y-moving stage 56 are driven by the interference microscopic optical system/sample back and side surface posture adjusting unit 82 on the basis of the design data of the back surface of the sample lens 9. Whenever the relative posture is changed, as described in (a) and (b) of (W2), the measurement distance of the interference microscopic optical system 14 is adjusted by the back and side surface measurement distance adjusting unit 85 and the adjustment data of the measurement distance is sequentially input to the sample back and side surface analyzer 84 along with the adjustment data of the relative posture by the interference microscopic optical system/sample back and side surface posture adjusting unit 82.
   (b) The measurement light is applied to the sample lens 9 from the interference microscopic optical system 14 of which the relative posture is sequentially changed, the back and side surface rotational position interference fringe (the interference fringe corresponding to the area of each intersection of the measurement light axis L and the sample back surface) formed by the interference of the reference light with the return light from the second curved surface 94, the flange back surface 96, and the flange side surface 97 of the sample lens 9 is imaged by the one-dimensional image sensor 23 of the first imaging camera 24 for each of the plural rotational positions of the sample back and side surfaces, and the image data is acquired. The back and side surface rotational position interference fringes are imaged in accordance with the instruction from the sample back and side surface interference fringe acquiring unit 83 and the image data is sequentially input to the sample back and side surface shape analyzer 84. The number of imaging operations can be set to any value, but the imaging operation is carried out 3600 times per 0.1 sec (once whenever the sample lens 9 is rotated by 0.1 degree) for which the sample lens 9 is rotated once. Whenever the back and side surface rotational position interference fringe is imaged, the rotation angle of the sample lens 9 at the imaging time is detected by the rotation encoder 55 and the detection data of the rotation position is sequentially input to the sample back and side surface shape analyzer 84.
   (c) The sample back and side surface shape information is calculated by the sample back and side surface shape analyzer 84 on the basis of the acquired back and side surface rotational position interference fringes, the detection data of the rotation position at the times of imaging the back and side surface rotational position interference fringes, the adjustment data of the relative posture by the interference microscopic optical system/sample back and side surface posture adjusting unit 82, and the adjustment data of the measurement distance by the back and side surface measurement distance adjusting unit 85.

### Entire Sample Shape Analysis

Then, by combining the first shape information of the sample side surface (the flange side surface 97) acquired in the sample top and side surface shape information acquiring step and the second shape information of the sample side surface (the flange side surface 97) acquired in the sample back and side surface shape information acquiring step, the entire sample shape information including the relative position information of the sample top surface (the first curved surface 93 and the flange top surface 95) and the sample back surface (the second curved surface 94 and the flange back surface 96) is acquired by the entire sample shape information acquiring unit 75 (the entire sample shape information acquiring step).

That is, since the first shape information and the second shape information of the sample side surface are acquired by measuring the same flange side surface 97, they should be equal to each other in a common coordinate system. Accordingly, by combining the information pieces so as to be equal to each other in the common coordinate, it is possible to clarify the correspondence between the first coordinate system in which the first shape information is acquired and the second coordinate system in which the second shape information is acquired.

The relative position relation of the flange side surface 97 and the sample top surface (the first curved surface 93 and the flange top surface 95) in the first shape information is specified in the first coordinate system, and the relative position relation of the flange side surface 97 and the sample back surface (the second curved surface 94 and the flange back surface 96) in the second shape information is specified in the second coordinate system. Therefore, when the correspondence between the first coordinate system and the second coordinate system is clarified, it is possible to specify the relative position relation of the sample top surface (the first curved surface 93 and the flange top surface 95) and the sample back surface (the second curved surface 94 and the flange back surface 96) and thus to acquire the entire sample shape information.

The relative position misalignment (surface misalignment) and the relative slope misalignment (surface inclination) of the first axis line A₁ and the second axis line A₂, the relative position misalignment (the surface eccentricity of the first curved surface 93) of the first axis line A₁ and the third axis line A₃, and the relative position misalignment (the surface eccentricity of the second curved surface 94) of the second axis line A₂ and the third axis line A₃ are calculated on the basis of the entire sample shape information by the axis misalignment analyzer 76.

The roundness of the sample side surface and the cylindrical roundness of the sample side surface are calculated on the basis of the entire sample shape information by the sample side surface analyzer 77.

### Second Embodiment

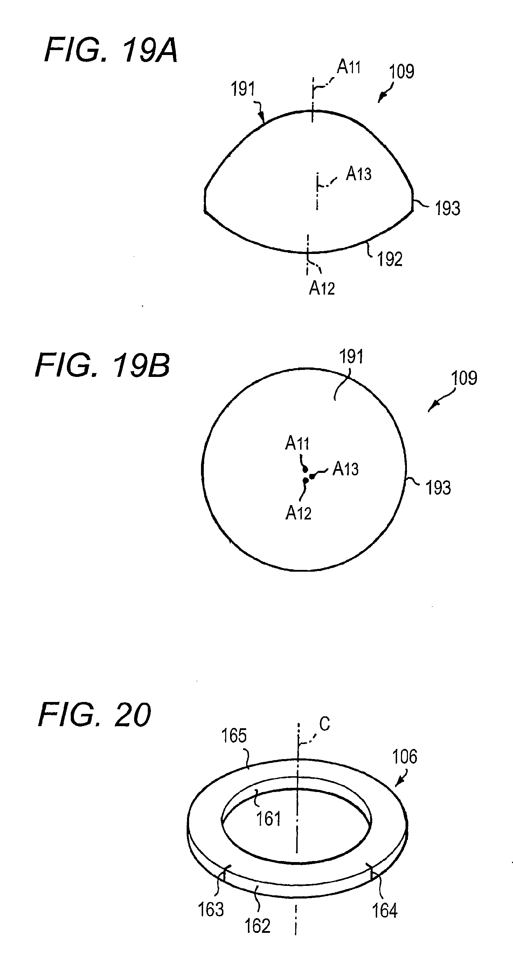

The configuration of a sample lens 109 as a sample and items to be measured according to a second embodiment of the invention will be described below with reference to Figs. 19 and 20.

In design, as shown in Fig. 19, the sample lens 109 includes a sample top surface having a first curved surface 191 (which is aspheric) formed in a rotated surface shape centered on a first axis line A₁₁, a sample back surface having a second curved surface 192 (which is spheric) formed in a rotated surface shape centered on a second axis line A₁₂, and an edge surface 193 (the end surface of the sample lens 109) formed in a cylindrical surface shape.

In the second embodiment, the sample top surface and the sample back surface are defined as described above, but the top surface of the sample lens 109 shown in Fig. 19A may be defined as the sample back surface (in this case, the curved surface denoted by reference numeral 191 is called second curved surface and the axis line denoted by reference sign A₁₁ is called second axis line) and the back surface thereof may be defined as the sample top surface (in this case, the curved surface denoted by reference numeral 192 is called first curved surface and the axis line denoted by reference sign A₁₂ is called first axis line).

The sample lens 109 is designed so that the first axis line A₁₁ and the second axis line A₁₂ are aligned with a third axis line A₁₃ (serving as the outer-diameter central axis of the edge surface 193) in the drawing, but the axis lines may not be aligned with each other due to production errors. For the purpose of easy understanding the drawing, an error of the axis misalignment is expressed great, but the axis misalignment has a small error of a light wavelength order or less.

In the second embodiment, various items to be measured, such as the surface inclination or the surface misalignment resulting from the production errors, are defined as follows. The below definitions are conveniently introduced to clarify the below description and other definitions may be considered.

Surface Inclination: The relative slope angle between the first axis line A₁₁ and the second axis line A₁₂ (the angle formed by the first axis line A₁₁ and the second axis line A₁₂; the angle formed by direction vectors of the axis lines when the first axis line A₁₁ and the second axis line A₁₂ do not intersect each other) is defined as the surface inclination of the sample lens 109 (where the magnitude of the slope angle is called an amount of surface inclination and the slope direction of the first axis line A₁₁ about the second axis line A₁₂ is called a surface inclination direction).

Surface Misalignment: The relative position misalignment of the first axis line A₁₁ and the second axis line A₁₂ is defined as the surface misalignment of the sample lens 109 (where the shortest length of the common vertical line between the first axis line A₁₁ and the second axis line A₁₂ is called an amount of surface misalignment and the extending direction of the common vertical line is called a surface misalignment direction).

Surface Eccentricity: The relative position misalignment of the first axis line A₁₁ and the third axis line A₁₃ is defined as the surface eccentricity of the first curved surface 191 (where the shortest length of the common vertical line between the first axis line A₁₁ and the third axis line A₁₃ is called an amount of surface eccentricity of the first curved surface 191 and the extending direction of the common vertical line is called a surface eccentricity direction of the first curved surface 191). Similarly, the relative position misalignment of the second axis line A₁₂ and the third axis line A₁₃ is defined as the surface eccentricity of the second curved surface 192 (where the shortest length of the common vertical line between the second axis line A₁₂ and the third axis line A₁₃ is called an amount of surface eccentricity of the second curved surface 192 and the extending direction of the common vertical line is called a surface eccentricity direction of the second curved surface 192).

The three-dimensional shape measuring device according to the second embodiment of the invention will be described below.

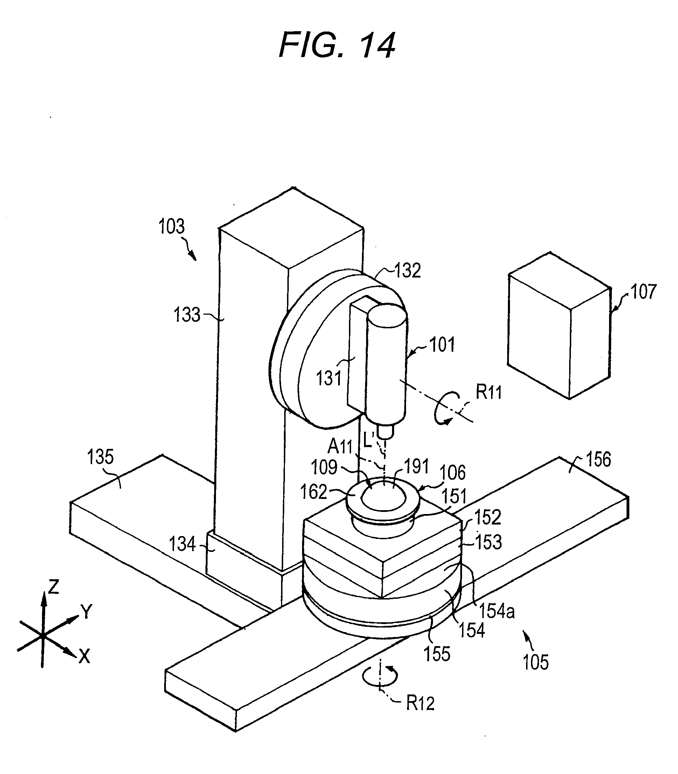

As shown in Fig. 14, the three-dimensional shape measuring device according to the second embodiment includes a microscopic interferometer 101, a measurement system alignment unit 103 adjusting the posture or position of the microscopic interferometer 101, a sample alignment unit 105 adjusting the posture or position of the sample lens 109, a holding jig 106 holding the sample lens 109, and an analysis controller 107.

As shown in Fig. 20, the holding jig 106 is a ring-like member in which the inner circumferential surface 161 and the outer circumferential surface 162 are both formed in a cylindrical surface shape centered on an axis line C', and linear positioning marks 163,164, and 165 extending from the outer edge of the top surface of the holding jig 106 in the drawing to the outer edge of the back surface in the drawing through the outer circumferential surface 162 are formed at three positions which are rotationally asymmetric about the axis line C' in the outer circumferential surface 162, respectively. The positioning marks 163,164, and 165 are formed, for example, by minute grooves or protrusions so as to be detected as figures by the microscopic interferometer 101.

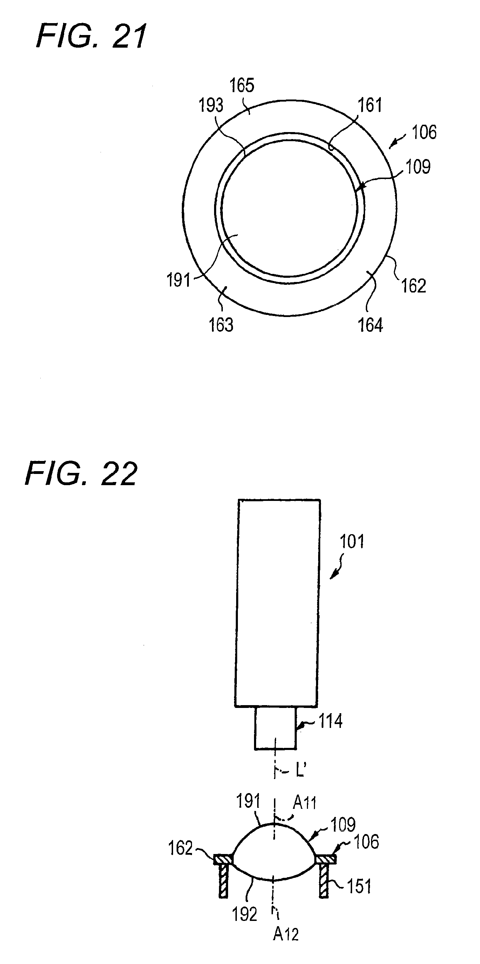

The diameter of the inner circumferential surface 61 of the holding jig 106 is slightly greater than the diameter of the edge surface 193 of the sample lens 109 and the sample lens 109 is surrounded from the outside in the diameter direction of the edge surface 193 as shown in Fig. 21, and the relative position to the sample lens 109 is fixed with an adhesive applied to the gap between the inner circumferential surface 161 and the edge surface 193. Instead of the fixation with the adhesive, plural (for example, three) protrusions may be disposed in the inner circumferential surface 161 of the holding jig 106 so as to be movable in the diameter direction and the holding jig 106 may be fixed to the sample lens 109 by pressing the protrusions against the sample lens 109 with a force of a spring or a screw. In this case, it should be noted that a strong internal stress is not applied to the sample lens 109 by the pressing force.

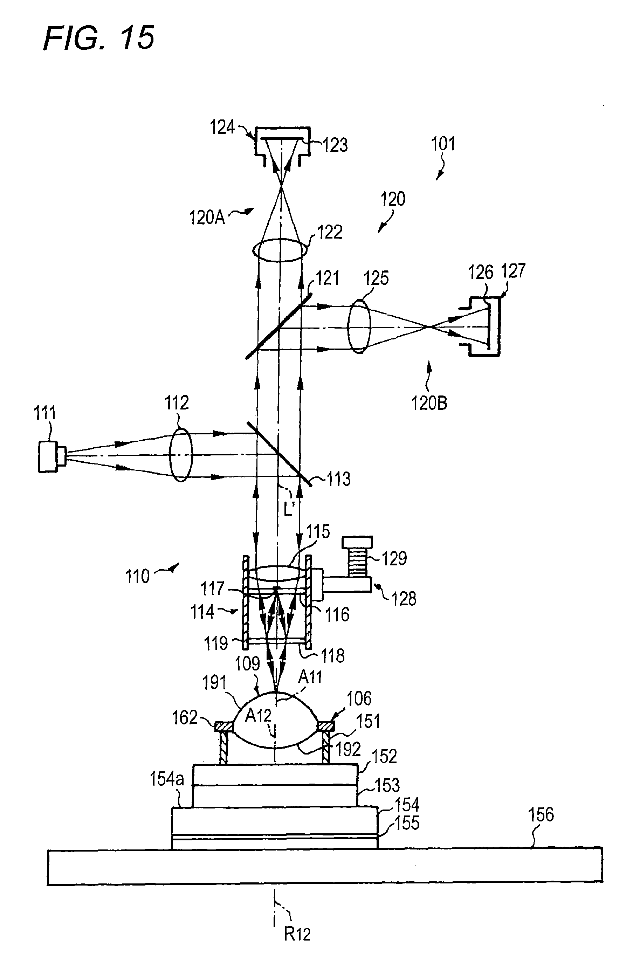

As shown in Fig. 15, the microscopic interferometer 101 includes a measurement light illuminating system 110 and an imaging system 120. The measurement light illuminating system 110 includes a light source unit 111, which is formed of an LED or an SLD, outputting a low-coherence light flux as the measurement light, a collimator lens 112 collimating the measurement light output from the light source unit 111, a light flux dividing optical element 113 reflecting the measurement light from the collimator lens 112 to the downside in the drawing, and an interference microscopic optical system 114 as a measurement probe applying the measurement light from the light flux dividing optical element 113 along a measurement light axis L' so as to be convergent on the sample lens 109 and combining the return light of the measurement light with reference light to acquire interference light.

The interference microscopic optical system 114 includes a convergence lens 115 constituting a mirror-type objective system and converting the measurement light from the light flux dividing optical element 113 from parallel light to convergent light, a transparent flat panel 116 disposed below the convergence lens 115 in the drawing, a reflecting element 117 disposed above the transparent flat panel 116 in the drawing, and a transflective element 118 disposed in an optical path of the measurement light from the convergence lens 115, which are all disposed inside a barrel 119. The transflective element 118 is configured to reflect a part of the measurement light from the convergence lens 115 and to transmit and output the other to the sample lens 109. The light reflected by the transflective element 118 is collected by the reflecting element 117, is reflected by the reflecting element 117, and is incident on the transflective element 118 again. Apart of the incident light is reflected by the transflective element 118 and serves as the reference light. The reference light is combined with the return light of the measurement light, which has been applied to the sample lens 109, from the collected area.

The interference microscopic optical system 114 is supported by a fringe scan adapter 128 having a piezoelectric element 129, is subjected to a fine adjustment of a distance from the sample lens 109 at the time of measurement, and is finely movable in the direction of the measurement light axis L' at the time of performing the fringe scan measurement.

On the other hand, the imaging system 120 includes a light flux dividing optical element 121 dividing the interference light passing through the light flux dividing optical element 113 and traveling up in the drawing from the interference microscopic optical system 114, a first imaging system 120A taking an image mainly when the sample lens 109 is being rotated, and a second imaging system 120B taking an image mainly when the sample lens 109 is stopped.

The first imaging system 120A includes an imaging lens 122 concentrating the interference light passing through the light flux dividing optical element 121 and traveling up in the drawing and a first imaging camera 124 having a one-dimensional image sensor 123 such as a CCD or a CMOS and acquires image data of an interference fringe formed on the one-dimensional image sensor 123 by the first imaging lens 122. On the contrary, the second imaging system 120B includes an imaging lens 125 concentrating the interference light reflected to the right side in the drawing by the light flux dividing optical element 121 and a second imaging camera 127 having a two-dimensional image sensor 126 such as a CCD or a CMOS and acquires image data of an interference fringe formed on the two-dimensional image sensor 126 by the second imaging lens 125.

As shown in Fig. 14, the measurement system alignment unit 103 includes a bracket 131 fixed to the microscopic interferometer 101, an interferometer tilting stage 132 (the tilting unit in the second embodiment) supporting the microscopic interferometer 101 with the bracket 131 interposed therebetween so as to be tilted about a rotation axis R₁₁ extending in the X axis direction in the drawing, an interferometer Z-moving stage 133 moving the microscopic interferometer 101 along with the interferometer tilting stage 132 in the Z axis direction in the drawing, an interferometer Y-tilting stage 134 tilting the microscopic interferometer 101 along with the interferometer Z-moving stage 133 about the Y axis in the drawing, and an interferometer X-moving stage 135 moving the microscopic interferometer 101 along with the interferometer Y-tilting stage 134 in the X axis direction in the drawing.

As shown in Fig. 14, the sample alignment unit 105 includes a sample stage 151 (the sample supporting unit in the second embodiment) supporting the sample lens 109 from the top surface or the back surface with a vacuum attractive force, a sample XY-tilting stage 152 tilting the sample lens 109 about the X axis and the Y axis in the drawing with the sample stage 151 interposed therebetween, a sample XY-moving stage 153 moving the sample lens 109 along with the sample XY-tilting stage 152 in the X axis direction and the Y axis direction in the drawing, a sample rotating stage 154 (the sample rotating unit in the second embodiment) rotating the sample lens 109 along with the sample XY-moving stage 153 about a rotation axis R₁₂ extending in the Z axis direction in the drawing, a rotation encoder 155 which is mounted on the sample rotation stage 154 and which detects a rotation angle of the sample rotating stage 154 (the rotational position of the sample lens 109 rotated by the sample rotating stage 154 about the rotation axis R₁₂), and a sample Y-moving stage 156 moving the sample lens 109 along with the sample rotating stage 155 in the Y axis direction in the drawing.

In the second embodiment, the relative position changing unit is constructed by the interferometer tilting stage 132, the interferometer Z-moving stage 133, the interferometer Y-tilting stage 134, the interferometer X-moving stage 135, and the sample Y-moving stage 156, and the rotational position detecting unit is constructed by the rotation encoder 155.

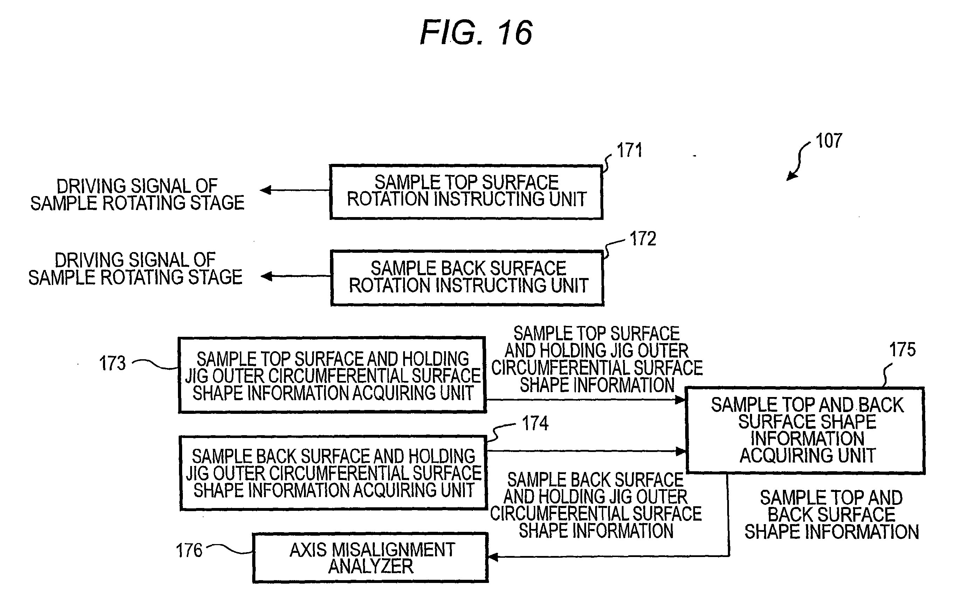

The analysis controller 107 calculates shape data of the sample lens 109 on the basis of the image data of the interference fringe acquired by the imaging system 120 or controls the driving of the stage and the like in the measurement system alignment unit 103 and the sample alignment unit 105, and includes, as shown in Fig. 16, a sample top surface rotation instructing unit 171, a sample back surface rotation instructing unit 172, a sample top surface and holding jig outer circumferential surface shape information acquiring unit 173, a sample back surface and holding jig outer circumferential surface shape information acquiring unit 174, a sample top and back surface shape information acquiring unit 175, and an axis misalignment analyzer 176, which are constructed by a CPU built in the analysis controller 107 or a storage unit such as a hard disk and programs stored in the storage unit.

The sample top surface rotation instructing unit 171 allows the sample rotating stage 154 to rotate the sample lens 109, which is supported from the back surface by the sample stage 151, in a state where the first axis line A₁₁ is aligned with the rotation axis R₁₂ of the sample rotating stage 154.

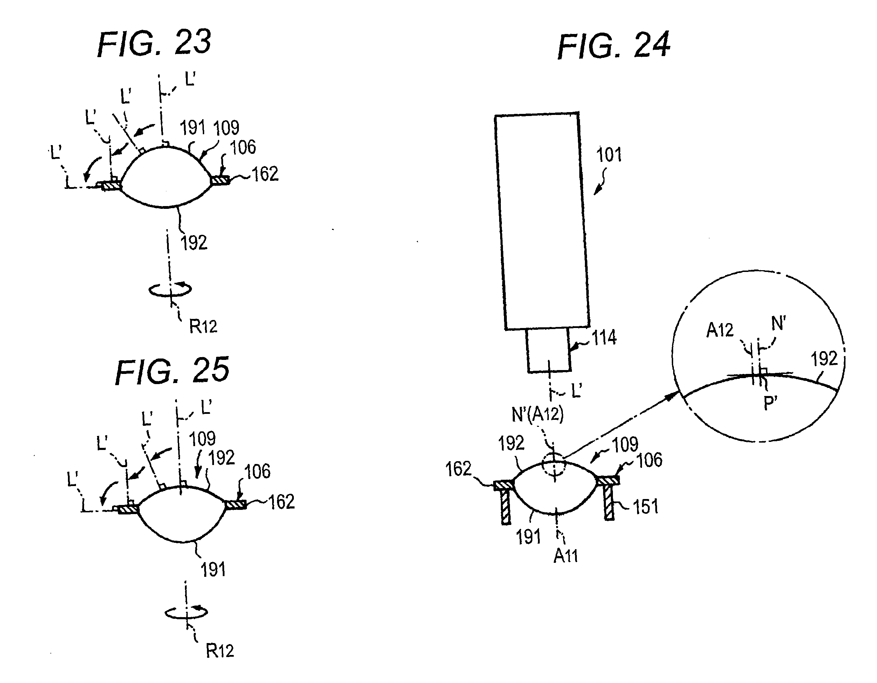

The sample back surface rotation instructing unit 172 allows the sample rotating stage 154 to rotate the sample lens 109, which is supported from the top surface by the sample stage 151, in a state where a vertical line N' (see Fig. 24) at a vertex P of the second curved surface 192 with the sample lens supported from the top surface is aligned with the rotation axis R₁₂ of the sample rotating stage 154.

The sample top surface and holding jig outer circumferential surface shape information acquiring unit 173 causes the interference microscopic optical system 114 to scan the sample top surface (the first curved surface 191) and the outer circumferential surface 162 of the holding jig 106 while changing the relative position of the interference microscopic optical system 114 and the sample lens 109 rotated by the sample top surface rotation instructing unit 171, and acquires the sample top surface and holding jig outer circumferential surface shape information including the shape information of the first curved surface 191, the first shape information of the outer circumferential surface 162, and the relative position information of the first curved surface 191 and the outer circumferential surface 162.

The sample back surface and holding jig outer circumferential surface shape information acquiring unit 174 causes the interference microscopic optical system 114 to scan the sample back surface (the second curved surface 192) and the outer circumferential surface 162 of the holding jig 106 while changing the relative position of the interference microscopic optical system 114 and the sample lens 109 rotated by the sample back surface rotation instructing unit 172, and acquires the sample back surface and holding jig outer circumferential surface shape information including the shape information of the second curved surface 192, the second shape information of the outer circumferential surface 162, and the relative position information of the second curved surface 192 and the outer circumferential surface 162.

The sample top and back surface shape information acquiring unit 175 acquires the sample top and back surface shape information including the relative position information of the sample top surface (the first curved surface 191) and the sample back surface (the second curved surface 192), by combining the first shape information of the outer circumferential surface 162 acquired by the sample top surface and holding jig outer circumferential surface shape information acquiring unit 173 and the second shape information of the outer circumferential surface 162 acquired by the sample back surface and holding jig outer circumferential surface shape information acquiring unit 174 with each other.

The axis misalignment analyzer 176 calculates the relative position misalignment (surface misalignment) and the relative slope misalignment (surface inclination) of the first axis line A₁₁ and the second axis line A₁₂ on the basis of the sample top and back surface shape information.

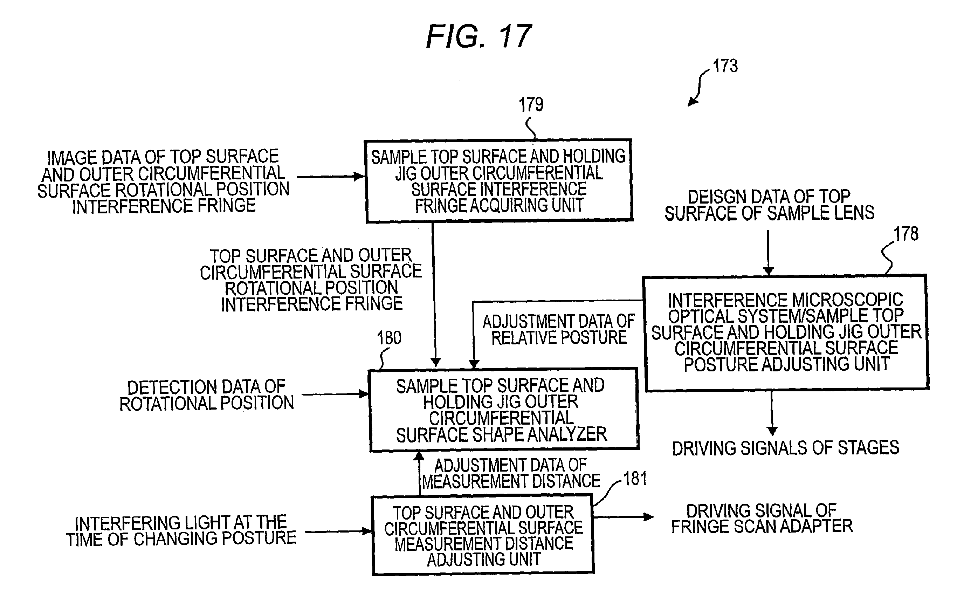

As shown in Fig. 17, the sample top surface and holding jig outer circumferential surface shape information acquiring unit 173 includes an interference microscopic optical system/sample top surface and holding jig outer circumferential surface posture adjusting unit 178, a sample top surface and holding jig outer circumferential surface interference fringe acquiring unit 179, a sample top surface and holding jig outer circumferential surface shape analyzer 180, and a top surface and outer circumferential surface measurement distance adjusting unit 181, which are constructed by a CPU built in the analysis controller 107 or a storage unit such as a hard disk and programs stored in the storage unit.

The interference microscopic optical system/sample top surface and holding jig outer circumferential surface posture adjusting unit 178 causes the relative position changing unit (the interferometer tilting stage 132, the interferometer Z-moving stage 133, and the interferometer Y-tilting stage 134, the interferometer X-moving stage 135, and the sample Y-moving stage 156) to sequentially change the relative posture of the interference microscopic optical system 114 and the sample lens 109, so that the position of an intersection point between the measurement light axis L' and the first curved surface 191 is moved in the diameter direction of the first curved surface 191 and the measurement light axis L' perpendicularly intersects a tangent plane of the first curved surface 191 at the position of the intersection point and so that the measurement light axis L' is moved in the outer circumferential surface 162 of the holding jig 106 and the measurement light axis L' perpendicularly intersects a tangent plane of the outer circumferential surface 162 at the position of the intersection point with the outer circumferential surface 162, on the basis of the design data of the sample top surface (the first curved surface 191) of the sample lens 109 rotated by the sample top surface rotation instructing unit 171.

The sample top surface and holding jig outer circumferential surface interference fringe acquiring unit 179 causes the interference microscopic optical system 114, the relative posture of which is sequentially changed by the interference microscopic optical system/sample top surface and holding jig outer circumferential surface posture adjusting unit 178, to sequentially apply the measurement light to the sample lens 109, causes the one-dimensional image sensor 123 of the first imaging camera 124 to image the top surface and outer circumferential surface rotational position interference fringe, which is formed by the interference of the reference light with the return light of the measurement light from the first curved surface 191 or the outer circumferential surface 162 of the holding jig 106, corresponding to the area of each intersection portion of the measurement light axis L' with the first curved surface 191 or the outer circumferential surface 162 for each of plural top surface and outer circumferential surface rotation positions of the sample lens 109, and acquires the image data of the top surface and outer circumferential surface position interference fringes.

The top surface and outer circumferential surface measurement distance adjusting unit 181 finely adjusts the measurement distance between the interference microscopic optical system 114 and the sample lens 109, so that the concentrating point of the measurement light is located in the first curved surface 191 or the outer circumferential surface 162 of the holding jig 106, on the basis of the light intensity of the interference light (interference light at the time of changing the posture) taken by the two-dimensional image sensor 126 of the second imaging camera 127 whenever the relative position is changed by the interference microscopic optical system/sample top surface and holding jig outer circumferential surface posture adjusting unit 178.

The sample top surface and holding jig outer circumferential surface shape analyzer 180 acquires the sample top surface and outer circumferential surface shape information on the basis of the sample top surface and outer circumferential surface rotational position interference fringes, the detection data of the rotational position by the rotation encoder 155 at the points of time when the top surface and outer circumferential surface rotational position interference fringes are imaged, the adjustment data of the relative posture by the interference microscopic optical system/sample top surface and holding jig outer circumferential surface posture adjusting unit 178, and the adjustment data of the measurement distance by the top surface and outer circumferential surface measurement distance adjusting unit 181.

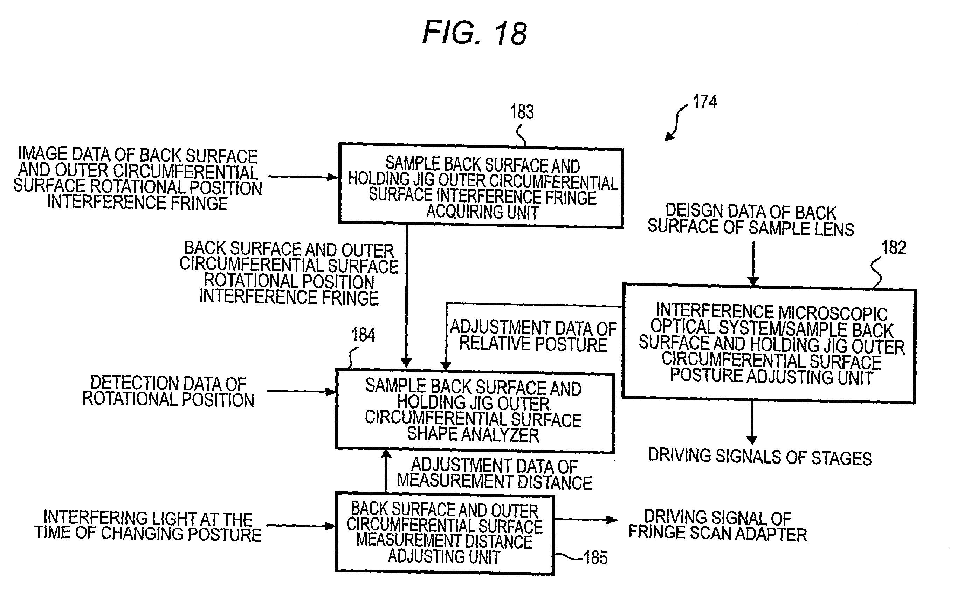

As shown in Fig. 18, the sample back surface and holding jig outer circumferential surface shape information acquiring unit 174 includes an interference microscopic optical system/sample back surface and holding jig outer circumferential surface posture adjusting unit 182, a sample back surface and holding jig outer circumferential surface interference fringe acquiring unit 183, a sample back surface and holding jig outer circumferential surface shape analyzer 184, and a back surface and outer circumferential surface measurement distance adjusting unit 185, which are constructed by a CPU built in the analysis controller 107 or a storage unit such as a hard disk and programs stored in the storage unit.

The interference microscopic optical system/sample back surface and holding jig outer circumferential surface posture adjusting unit 182 causes the relative position changing unit (the interferometer tilting stage 132, the interferometer Z-moving stage 133, the interferometer Y-tilting stage 134, the interferometer X-moving stage 135, and the sample Y-moving stage 156) to sequentially change the relative posture of the interference microscopic optical system 114 and the sample lens 109, so that the position of an intersection point between the measurement light axis L' and the second curved surface 192 is moved in the diameter direction of the second curved surface 192 and the measurement light axis L' perpendicularly intersects a tangent plane of the second curved surface 192 at the position of the intersection point and so that the measurement light axis L' is moved in the outer circumferential surface 162 of the holding jig 106 and the measurement light axis L' perpendicularly intersects a tangent plane of the outer circumferential surface 162 at the position of the intersection point with the outer circumferential surface 162, on the basis of the design data of the sample back surface (the second curved surface 192) of the sample lens 109 rotated by the sample back surface rotation instructing unit 172.

The sample back surface and holding jig outer circumferential surface interference fringe acquiring unit 183 causes the interference microscopic optical system 114, the relative posture of which is sequentially changed by the interference microscopic optical system/sample back surface and holding jig outer circumferential surface posture adjusting unit 182, to sequentially apply the measurement light to the sample lens 109, causes the one-dimensional image sensor 123 of the first imaging camera 124 to image the back surface and outer circumferential surface rotational position interference fringe, which is formed by the interference of the reference light with the return light of the measurement light from the second curved surface 192 or the outer circumferential surface 162 of the holding jig 106, corresponding to the area of each intersection portion of the measurement light axis L' with the second curved surface 192 or the outer circumferential surface 162 for each of plural back surface and outer circumferential surface rotation positions of the sample lens 109, and acquires the image data of the back surface and outer circumferential surface position interference fringes.

The back surface and outer circumferential surface measurement distance adjusting unit 185 finely adjusts the measurement distance between the interference microscopic optical system 114 and the sample lens 109, so that the concentrating point of the measurement light is located in the second curved surface 192 or the outer circumferential surface 162 of the holding jig 106, on the basis of the light intensity of the interference light (interference light at the time of changing the posture) taken by the two-dimensional image sensor 126 of the second imaging camera 127 whenever the relative position is changed by the interference microscopic optical system/sample back surface and holding jig outer circumferential surface posture adjusting unit 182.

The sample back surface and holding jig outer circumferential surface shape analyzer 184 acquires the sample back surface and outer circumferential surface shape information on the basis of the sample back surface and outer circumferential surface rotational position interference fringes, the detection data of the rotational position by the rotation encoder 155 at the points of time when the back surface and outer circumferential surface rotational position interference fringes are imaged, the adjustment data of the relative posture by the interference microscopic optical system/sample back surface and holding jig outer circumferential surface posture adjusting unit 182, and the adjustment data of the measurement distance by the back surface and outer circumferential surface measurement distance adjusting unit 185.

The three-dimensional shape measuring method according to the second embodiment of the invention will be described now. The three-dimensional shape measuring method according to the second embodiment is performed using the three-dimensional shape measuring device according to the second embodiment.

### Initial Adjustment of Alignment Unit

The initial adjustment of the measurement system alignment unit 103 and the sample alignment unit 105 will be first described, which is carried out before the measurement. The initial adjustment is carried out to align the rotation axis R₁₂ of the sample rotating stage 154 with the measurement light axis L' of the microscopic interferometer 101 with high precision before placing the sample lens 109 on the sample stage 151.
(J1) First, the relative position of the microscopic interferometer 101 and the sample rotating stage 154 is adjusted using the interferometer Z-moving stage 133, the interferometer X-moving stage 135, and the sample Y-moving stage 156 so that the measurement light from the microscopic interferometer 101 is concentrated and applied onto a rotating disk surface 154a (which is smooth with high precision) of the sample rotating stage 154 shown in Fig. 14 in a state where the sample rotating stage 154 is stopped. The adjustment of the relative position is carried out by causing an operator to manually adjust the relative position of the microscopic interferometer 101 and the rotating disk surface 154a while checking the relative position, but may be automatically carried out by constructing the device so as to recognize the relative position of the microscopic interferometer 101 and the rotating disk surface 154a.
(J2) Then, the measurement light is applied to the rotating disk surface 154a from the microscopic interferometer 101 of which the relative position has been adjusted, the interference fringe formed by the interference of the return light with the reference light is imaged using the two-dimensional image sensor 126 of the second imaging camera 127 shown in Fig. 15, and the slope of the microscopic interferometer 101 is adjusted using the interferometer tilting stage 132 and the interferometer Y-tilting stage 134 shown in Fig. 14 so that the imaged interference fringe is in a null pattern state. Accordingly, the measurement light axis L' is parallel to the rotation axis R₁₂.
(J3) Subsequently, a parallel flat panel of which the top and back surfaces are smoothed with high precision is placed on the sample stage 151, and the relative position of the microscopic interferometer 101 and the sample stage 151 is adjusted using the interferometer Z-moving stage 133, the interferometer X-moving stage 135, and the sample Y-moving stage 156 so that the measurement light from the microscopic interferometer 101 is concentrated and applied onto the parallel flat panel surface (the surface facing the microscopic interferometer 101).
(J4) The measurement light is applied to the parallel flat panel surface from the microscopic interferometer 101 of which the relative position has been adjusted, the interference fringe formed by the interference of the return light with the reference light is imaged using the two-dimensional image sensor 126 of the second imaging camera 127, and the slope of the parallel flat panel on the sample stage 151 is adjusted using the sample XY-tilting stage 152 shown in Fig. 14 so that the imaged interference fringe is in the null pattern state. Accordingly, the parallel flat panel surface is perpendicular to the rotation axis R₁₂ and the measurement light axis L'.
(J5) The adjustment jig 4 shown in Fig. 9 is placed and fixed onto the parallel flat panel surface.
(J6) The adjustment jig 4 is rotated about the rotation axis R₁₂ using the sample rotating stage 154, the measurement light is applied to the rotating adjustment jig 4 from the microscopic interferometer 101, and three interference fringe images, which are formed by causing the return light from the three reflecting planes 41 to 43 with the reference light, corresponding to the three reflecting planes 41 to 43 are imaged using the two-dimensional image sensor 126 of the second imaging camera 127 at each of plural positions of the adjustment jig 4.
(J7) A rotation locus of the intersection point M of the adjustment jig 4 is calculated from the three interference fringe images imaged at each of the plural rotational positions, and the position ofthe rotation axis R₁₂ is specified with respect to the rotation locus. The relative position of the microscopic interferometer 101 and the sample rotating stage 154 is adjusted using the interferometer X-moving stage 135 and the sample Y-moving stage 156 shown in Fig. 14 so that the measurement light axis L' is aligned with the rotation axis R₁₂ of which the position has been specified. Accordingly, the initial adjustment of the measurement system alignment unit 103 and the sample alignment unit 105 is completed.

### Measurement of Sample Top Surface and Holding Jig Outer Circumferential Surface Shape

The top surface (the area including the first curved surface 191 and the outer circumferential surface 162 of the holding jig 106) of the sample lens 109 is measured in the following flow of processes.
(K1) First, the sample lens 109 is supported from the back surface with the holding jig 106 interposed therebetween using the sample stage 151 so that the first curved surface 191 faces the microscopic interferometer 101 (the sample back surface supporting step; see Fig. 22). In the stage where the sample lens 109 is placed and supported on the sample stage 151, the first axis line A₁₁ of the first curved surface 191 is located in the vicinity of the rotation axis R₁₂ (and the measurement light axis L' aligned thereto), but it cannot said that the first axis line is exactly aligned with the rotation axis R₁₂. Accordingly, the adjustment for exactly aligning the first axis line A₁₁ with the rotation axis R₁₂ is carried out in the following flow of processes.
   (a) The interference microscopic optical system 114 is sequentially moved in the direction of the measurement light axis L' using the fringe scan adapter 128, the measurement light is applied to the first curved surface 191 every movement, and the interference light of the return light reflected from the first curved surface 191 with the reference light is taken using the two-dimensional image sensor 126 of the second imaging camera 127. The moving distance of the interference microscopic optical system 114 is automatically controlled by the top surface and outer circumferential surface measurement distance adjusting unit 181.
   (b) The light intensity of the interference light taken every movement is measured by the top surface and outer circumferential surface measurement distance adjusting unit 181, and the interference microscopic optical system 114 is disposed at the optimal position (the position where the measurement light is concentrated on the first curved surface 191) where the light intensity of the interference light is the maximum.
   (c) The measurement light is applied to the first curved surface 191 from the interference microscopic optical system 114 located at the optimal position, and the interference fringe image formed by causing the return light to interfere with the reference light is imaged using the two-dimensional image sensor 126 of the second imaging camera 127.
   (d) The shape information of a partial area (an area corresponding to the interference fringe image) of the first curved surface 191 is calculated from the imaged interference fringe images.
   (e) The calculated shape information is combined with the design data of the first curved surface 191 of the sample lens 109, the relative slope misalignment between the first axis line A₁₁ and the rotation axis R₁₂ (the measurement light axis L') is calculated from the combination result, and the slope of the sample lens 109 on the sample stage 151 is adjusted using the sample XY-tilting stage 152 so that the first axis A₁₁ is parallel to the rotation axis R₁₂.
   (f) After the adjustment of the slope, the measurement light is applied to the first curved surface 191 of the sample lens 109 from the interference microscopic optical system 114 again and the interference fringe image formed by causing the return light to interfere with the reference light is imaged using the two-dimensional image sensor 126 of the second imaging camera 127.
   (g) The relative position misalignment between the first axis line A₁₁ and the rotation axis R₁₂ (the measurement axis line L') is calculated from the imaged interference fringe images (the interference fringe images of a coaxial ring shape centered on the position of the intersection point between the first axis line A₁₁ and the first curved surface 191), and the position of the sample lens 109 on the sample stage 151 is adjusted using the sample XY-moving stage 153 so that the first axis line A₁₁ is aligned with the rotation axis R₁₂. Accordingly, the first axis line A₁₁ is aligned with the rotation axis R₁₂,
   The relative posture of the interference microscopic optical system 114 to the sample lens 109 in the state where the first axis line A₁₁ is aligned with the rotation axis R₁₂ is stored in the interference microscopic optical system/sample top surface and holding jig outer circumferential surface posture adjusting unit 178 as the reference posture at the time of measuring the sample top surface, and is used to change the relative posture of the interference microscopic optical system 114 to the sample lens 109.
(K2) Subsequently to the process of (K1), the sample lens 109 is rotated about the rotation axis R₁₂ using the sample rotating stage 154 in the state where the first axis line A₁₁ of the first curved surface 191 is aligned with the rotation axis R₁₂ of the sample rotating stage 154 (the sample top surface rotating step). The sample rotating stage 154 is controlled by the sample top surface rotation instructing unit 171. At this time, the rotational velocity can be set to any value, but is set to, for example, one rotation per 0.1 sec in the second embodiment.
(K3) Then, the interference microscopic optical system 114 is caused to sequentially scan the first curved surface 191, the outer circumferential surface 162 of the holding jig 106 of the rotated sample lens 109 while changing the relative position of the sample lens 109 and the interference microscopic optical system 114 using the interferometer tilting stage 132, the interferometer Z-moving stage 133, and the sample Y-moving stage 156 shown in Fig. 14, and the sample top surface and holding jig outer circumferential surface shape information including the shape information of the first curved surface 191, the shape information (first shape information) ofthe outer circumferential surface 162 of the holding jig 106, and the relative position information ofthe first curved surface 191 and the outer circumferential surface 162 is acquired in a predetermined coordinate system (hereinafter, referred to as "third coordinate system") (the sample top surface and holding jig outer circumferential surface shape information acquiring step). The sample top surface and holding jig outer circumferential surface shape information acquiring step is carried out in the following flow of processes.
   (a) The interferometer tilting stage 132, the interferometer Z-moving stage 133, and the sample Y-moving stage 156 are caused to sequentially change the relative posture ofthe interference microscopic optical system 114 to the sample lens 109, so that the position ofthe intersection point on the rotated sample lens 109 between the measurement light axis L' of the interference microscopic optical system 114 and the first curved surface 191 is moved in the diameter direction of the first curved surface 191 and the measurement light axis L' perpendicularly intersects the tangent plane of the first curved surface 191 at the position of the intersection point and so that the measurement light axis L' is moved in the outer circumferential surface 162 ofthe holding jig 106 and the measurement light axis L' perpendicularly intersects the tangent plane of the outer circumferential surface 162 at the position of the intersection point (see Fig. 11). In the second embodiment, the entire area of the first curved surface 191 and the outer circumferential surface 162 is measured. The interferometer tilting stage 132, the interferometer Z-moving stage 133, and the sample Y-moving stage 156 are driven by the interference microscopic optical system/sample top surface and holding jig outer circumferential surface posture adjusting unit 178 on the basis of the design data of the top surface of the sample lens 109. Whenever the relative posture is changed, as described in (a) and (b) of (K1), the measurement distance of the interference microscopic optical system 114 is adjusted by the top surface and outer circumferential surface measurement distance adjusting unit 181 and the adjustment data of the measurement distance is sequentially input to the sample top surface and holding jig outer circumferential surface shape analyzer 180 along with the adjustment data of the relative posture by the interference microscopic optical system/sample top surface and holding jig outer circumferential surface posture adjusting unit 178.
   (b) The measurement light is applied to the sample lens 109 from the interference microscopic optical system 114 of which the relative posture is sequentially changed, the top surface and outer circumferential surface rotational position interference fringe (the interference fringe corresponding to the area of each intersection of the measurement light axis L' and the first curved surface 191 or the outer circumferential surface 162) formed by the interference of the reference light with the return light from the first curved surface 191 and the outer circumferential surface 162 of the sample lens 109 is imaged by the one-dimensional image sensor 123 of the first imaging camera 124 for each of the plural rotational positions of the sample top surface and holding jig outer circumferential surfaces, and the image data is acquired. The top surface and outer circumferential surface rotational position interference fringes are imaged in accordance with the instruction from the sample top surface and holding jig outer circumferential surface interference fringe acquiring unit 179 and the image data is sequentially input to the sample top surface and holding jig outer circumferential surface shape analyzer 180. The number of imaging operations can be set to any value, but the imaging operation is carried out 3600 times per 0.1 sec (once whenever the sample lens 109 is rotated by 0.1 degree) for which the sample lens 109 is rotated once in the second embodiment. Whenever the top surface and outer circumferential surface rotational position interference fringe is imaged, the rotation angle of the sample lens 109 at the imaging time is detected by the rotation encoder 155 and the detection data of the rotation position is sequentially input to the sample top surface and holding jig outer circumferential surface shape analyzer 180.
   (c) The sample top surface and holding jig outer circumferential surface shape information is calculated by the sample top surface and holding jig outer circumferential surface shape analyzer 180 on the basis of the acquired top surface and outer circumferential surface rotational position interference fringes, the detection data of the rotation position at the times of imaging the top surface and outer circumferential surface rotational position interference fringes, the adjustment data of the relative posture by the interference microscopic optical system/sample top surface and holding jig outer circumferential surface posture adjusting unit 178, and the adjustment data of the measurement distance by the top surface and outer circumferential surface measurement distance adjusting unit 181.

### Measurement of Sample Back Surface and Holding Jig Outer Circumferential Surface Shape

The back surface (the area including the second curved surface 192 and the outer circumferential surface 162 of the holding jig 106) of the sample lens 109 is measured in the following flow of processes.
(L1) First, the relative position of the microscopic interferometer 101 and the sample rotating stage 154 is returned to the state where the initial adjustment of the measurement system alignment unit 103 and the sample alignment unit 105 is completed.
(L2) Then, the sample lens 109 is supported from the top surface using the sample stage 151 so that the second curved surface 192 faces the microscopic interferometer 101 with the holding jig 106 interposed therebetween (the sample top surface supporting step; see Fig. 24). The second curved surface 192 is spheric. Accordingly, in the stage where the sample lens 109 is placed and supported on the sample stage 151, a vertex P' exists in the second curved surface 192 in the state where it is supported from the top surface and a vertical line N' (parallel to the measurement light axis L') perpendicularly intersecting the tangent plane of the second curved surface 192 can be set in the vertex P'. When the sample lens 109 is formed as the design data, the vertical line N' is aligned with the second axis line A₁₂ of the second curved surface 192. However, when the surface eccentricity exists in the second curved surface 192, the lines are not aligned with each other. Unlike the first axis line A₁₁ of the first curved surface 191 which is aspheric, the position of the second axis line A₁₂ can be specified only after the entire shape of the sample lens 109 is measured. In the stage where the sample lens 109 is placed and supported on the sample stage 151, the second axis line is located in the vicinity of the vertical line N' of the second curved surface 192 and the rotation axis R₁₂ (and the measurement light axis L' aligned therewith), but it cannot be said that it is exactly aligned with the rotation axis R_{12'} Accordingly, the adjustment for exactly aligning the vertical line N' with the rotation axis R₁₂ is carried out in the following flow of processes.
   (a) The interference microscopic optical system 114 is sequentially moved in the direction of the measurement light axis L' using the fringe scan adapter 128, the measurement light is applied to the second curved surface 192 every movement, and the interference light of the return light reflected from the second curved surface 192 with the reference light is taken using the two-dimensional image sensor 126 of the second imaging camera 127. The moving distance of the interference microscopic optical system 114 is automatically controlled by the back surface and outer circumferential surface measurement distance adjusting unit 185.
   (b) The light intensity of the interference light taken every movement is measured by the back surface and outer circumferential surface measurement distance adjusting unit 185, and the interference microscopic optical system 114 is disposed at the optimal position (the position where the measurement light is concentrated on the second curved surface 192) where the light intensity of the interference light is the maximum.
   (c) The measurement light is applied to the second curved surface 192 from the interference microscopic optical system 114 located at the optimal position, and the interference fringe image formed by causing the return light to interfere with the reference light is imaged using the two-dimensional image sensor 126 of the second imaging camera 127.
   (d) The relative position misalignment between the vertical line N' and the rotation axis R₁₂ (the measurement axis line L') is calculated from the imaged interference fringe images (the interference fringe images of a coaxial ring shape centered on the vertical line N'), and the position of the sample lens 109 on the sample stage 151 is adjusted using the sample XY-moving stage 153 so that the vertical line N' is aligned with the rotation axis R₁₂.
   The relative posture of the interference microscopic optical system 114 to the sample lens 109 in the state where the vertical line N' is aligned with the rotation axis R₁₂ is stored in the interference microscopic optical system/sample back surface and holding jig outer circumferential surface posture adjusting unit 182 as the reference posture at the time of measuring the sample back surface, and is used to change the relative posture of the interference microscopic optical system 114 to the sample lens 109.
(L3) Subsequently to the process of (L2), the sample lens 109 is rotated about the rotation axis R₁₂ using the sample rotating stage 154 in the state where the vertical line N' of the second curved surface 192 is aligned with the rotation axis R₁₂ of the sample rotating stage 154 (the sample back surface rotating step). The sample rotating stage 154 is controlled by the sample back surface rotation instructing unit 172. At this time, the rotational velocity can be set to any value, but is set to, for example, one rotation per 0.1 sec in the second embodiment.
(L4) Then, the interference microscopic optical system 114 is caused to sequentially scan the second curved surface 192 and the outer circumferential surface 162 of the holding jig 106 of the rotated sample lens 109 while changing the relative position ofthe sample lens 109 and the interference microscopic optical system 114 using the interferometer tilting stage 132, the interferometer Z-moving stage 133, and the sample Y-moving stage 156 shown in Fig.14, and the sample back surface and holding jig outer circumferential surface shape information including the shape information of the second curved surface 192, the shape information (second shape information) of the outer circumferential surface 162 of the holding jig 106, and the relative position information ofthe second curved surface 192 and the outer circumferential surface 162 is acquired in a coordinate system (hereinafter, referred to as "fourth coordinate system") other than the third coordinate system (the sample back surface and holdingjig outer circumferential surface shape information acquiring step). The sample back surface and holding jig outer circumferential surface shape information acquiring step is carried out in the following flow of processes.
   (a) The interferometer tilting stage 132, the interferometer Z-moving stage 133, and the sample Y-moving stage 156 are caused to sequentially change the relative posture of the interference microscopic optical system 114 to the sample lens 109, so that the position of the intersection point on the rotated sample lens 109 between the measurement light axis L' of the interference microscopic optical system 114 and the second curved surface 192 is moved in the diameter direction ofthe second curved surface 192 and the measurement light axis L' perpendicularly intersects the tangent plane of the second curved surface 192 at the position ofthe intersection point every movement and so that the measurement light axis L' is moved in the outer circumferential surface 162 of the holding jig 106 and the measurement light axis L' perpendicularly intersects the tangent plane of the outer circumferential surface 162 at the position of the intersection point (see Fig. 25). In the second embodiment, the entire area of the second curved surface 192 and the outer circumferential surface 162 is measured. The interferometer tilting stage 132, the interferometer Z-moving stage 133, and the sample Y-moving stage 156 are driven by the interference microscopic optical system/sample back surface and holding jig outer circumferential surface posture adjusting unit 182 on the basis of the design data of the back surface of the sample lens 109. Whenever the relative posture is changed, as described in (a) and (b) of (L2), the measurement distance of the interference microscopic optical system 114 is adjusted by the back surface and outer circumferential surface measurement distance adjusting unit 185 and the adjustment data of the measurement distance is sequentially input to the sample back surface and holding jig outer circumferential surface analyzer 184 along with the adjustment data of the relative posture by the interference microscopic optical system/sample back surface and holding jig outer circumferential surface posture adjusting unit 182.
   (b) The measurement light is applied to the sample lens 109 from the interference microscopic optical system 114 of which the relative posture is sequentially changed, the back surface and outer circumferential surface rotational position interference fringe (the interference fringe corresponding to the area of each intersection of the measurement light axis L' and the second curved surface 192 or the outer circumferential surface 162) formed by the interference of the reference light with the return light from the second curved surface 192 and the outer circumferential surface 162 is imaged by the one-dimensional image sensor 123 of the first imaging camera 124 for each of the plural rotational positions of the sample back surface and holding jig outer circumferential surfaces, and the image data is acquired. The back surface and outer circumferential surface rotational position interference fringes are imaged in accordance with the instruction from the sample back surface and holding jig outer circumferential surface interference fringe acquiring unit 183 and the image data is sequentially input to the sample back surface and holding jig outer circumferential surface shape analyzer 184. The number of imaging operations can be set to any value, but the imaging operation is carried out 3600 times per 0.1 sec (once whenever the sample lens 109 is rotated by 0.1 degree) for which the sample lens 109 is rotated once in the second embodiment. Whenever the back surface and outer circumferential surface rotational position interference fringe is imaged, the rotation angle of the sample lens 109 at the imaging time is detected by the rotation encoder 155 and the detection data of the rotation position is sequentially input to the sample back surface and holding jig outer circumferential surface shape analyzer 184.
   (c) The sample back surface and holding jig outer circumferential surface shape information is calculated by the sample back surface and holding jig outer circumferential surface shape analyzer 184 on the basis of the acquired back surface and outer circumferential surface rotational position interference fringes, the detection data of the rotation position at the times of imaging the back surface and outer circumferential surface rotational position interference fringes, the adjustment data of the relative posture by the interference microscopic optical system/sample back surface and holding jig outer circumferential surface posture adjusting unit 182, and the adjustment data of the measurement distance by the back surface and outer circumferential surface measurement distance adjusting unit 185. Sample Top and Back Surface Shape Analysis

Then, by combining the first shape information of the outer circumferential surface 162 of the holding jig 106 acquired in the sample top surface and holding jig outer circumferential surface shape information acquiring step and the second shape information of the outer circumferential surface 162 of the holding jig 106 acquired in the sample back surface and holding jig outer circumferential surface shape information acquiring step, the sample top and back surface shape information including the relative position information of the sample top surface (the first curved surface 191) and the sample back surface (the second curved surface 192) is acquired by the sample top and back surface shape information acquiring unit 175 (the sample top and back surface shape information acquiring step). The positioning marks 163,164, and 165 formed in the outer circumferential surface 162 of the holding jig 106 are used as positioning indicators for combining the first shape information and the second shape information with each other.

Since the first shape information and the second shape information of the outer circumferential surface 162 of the holding jig 106 are acquired by measuring the outer circumferential surface 162 of the same holding jig 106, the positions of the positioning marks 163,164, and 165 and they should be equal to each other in a common coordinate system. Accordingly, by combining the information pieces so as to be equal to each other in the common coordinate, it is possible to clarify the correspondence between the third coordinate system in which the first shape information is acquired and the fourth coordinate system in which the second shape information is acquired.

The relative position relation of the outer circumferential surface 162 and the first curved surface 191 in the first shape information is specified in the third coordinate system, and the relative position relation of the outer circumferential surface 162 and the second curved surface 192 in the second shape information is specified in the fourth coordinate system. Therefore, when the correspondence between the third coordinate system and the fourth coordinate system is clarified, it is possible to specify the relative position relation of the sample top surface (the first curved surface 191) and the sample back surface (the second curved surface 192) and thus to acquire the sample top and back surface shape information.

The relative position misalignment (surface misalignment) and the relative slope misalignment (surface inclination) of the first axis line A₁₁ and the second axis line A₁₂, the relative position misalignment (the surface eccentricity of the first curved surface 191) of the first axis line A₁₁ and the third axis line A₁₃, and the relative position misalignment (the surface eccentricity of the second curved surface 192) of the second axis line A₁₂ and the third axis line A₁₃ are calculated on the basis of the sample top and back surface shape information by the axis misalignment analyzer 176.

While the embodiments of the invention have been described, the invention is not limited to the embodiments but can be modified in various forms.

For example, it is assumed in the first embodiment that the first curved surface 93 of the sample lens 9 is aspheric and the second curved surface 94 is spheric. However, the first curved surface 93 may be spheric and the second curved surface 94 may be aspheric. When the first curved surface 93 is spheric, the measurement can be carried out on the basis of the above-mentioned measurement flow of the second curved surface 94. That is, in this case, the measurement is carried out in the state where the rotation axis R₂ is aligned with the vertical line (not shown) of the first curved surface 93 with the sample lens 9 supported from the back surface thereof On the other hand, when the second curved surface 94 is aspheric, the measurement can be carried out on the basis of the above-mentioned measurement flow of the first curved surface 93. That is, in this case, the measurement is carried out in the state where the rotation axis R₂ is aligned with the second axis line A₂ of the second curved surface 94.

Similarly, it is assumed in the second embodiment that the first curved surface 191 of the sample lens 109 is aspheric and the second curved surface 192 is spheric. However, the first curved surface 191 may be spheric and the second curved surface 192 may be aspheric. When the first curved surface 191 is spheric, the measurement can be carried out on the basis of the above-mentioned measurement flow of the second curved surface 192. That is, in this case, the measurement is carried out in the state where the rotation axis R₁₂ is aligned with the vertical line (not shown) of the first curved surface 191 with the sample lens 109 supported from the back surface thereof On the other hand, when the second curved surface 192 is aspheric, the measurement can be carried out on the basis of the above-mentioned measurement flow of the first curved surface 191. That is, in this case, the measurement is carried out in the state where the rotation axis R₁₂ is aligned with the second axis line A₁₂ of the second curved surface 192.

In the first embodiment, the entire area of the sample side surface (the flange side surface 97) is measured. However, when the roundness or the cylindrical roundness (particularly, the cylindrical roundness) of the sample side surface need not be measured, only a partial area of the sample side surface may be measured. However, since the relative position relation between the sample top surface and the sample back surface is calculated, it is necessary that the measuring area of the sample side surface at the time of measuring the top surface of the sample and the measuring area of the sample side surface at the time of measuring the back surface should partially overlap with each other.

Similarly, in the second embodiment, the entire area of the outer circumferential surface 162 of the holding jig 106 is measured, but only a partial area of the sample side surface may be measured. However, since the relative position relation between the sample top surface and the sample back surface is calculated, it is necessary that the measuring area of the outer circumferential surface 162 of the holding jig 106 at the time of measuring the top surface of the sample and the measuring area of the outer circumferential surface 162 of the holdingjig 106 at the time of measuring the back surface should partially overlap with each other.

In the second embodiment, the second three-dimensional shape measuring method and device according to the invention are applied to the sample lens 109 having the edge surface 93, but the second three-dimensional shape measuring method and device according to the invention may be applied to a sample (not limited to a lens) not having such an edge surface. Some lenses have a flange-like extending portion (called "flange", "extension", or the like) in the circumferential portion thereof (see the sample lens 9). The second three-dimensional shape measuring method and device according to the invention may be applied to such lenses.

Although the holding jig 106 has a complete ring shape not having any cutout in the second embodiment, a C-shaped holding jig (not shown) having a slit in a part of a circumference may be employed. The positioning marks 163,164, and 165 are useful for easily combining the first shape information and the second shape information of the outer circumferential surface 162 of the holding jig 106, but may not be particularly provided when the first and second shape information can be combined without the positioning marks.

The mirror-type interference microscopic optical systems 14 and 114 are used as the measurement probe in the above-mentioned embodiments, but a Michelson interference microscopic optical system (not shown) may be employed.

Instead of the microscopic interferometers 1 and 101, other measurement probes of a contact type or a non-contact type (such as a scanning probe microscope (SPM), such as a scanning tunneling microscope (STM) and an atomic force microscope (AFM) or an optical stylus) may be employed.

## Claims

1. A three-dimensional shape measuring method of measuring a shape of a sample, which includes a sample top surface having a first curved surface formed in a rotated surface shape centered on a first axis line, a sample back surface having a second curved surface formed in a rotated surface shape centered on a second axis line, and a sample side surface formed in a cylindrical surface shape, using a measurement probe, the method comprising:
setting to support the sample from the sample back surface;
rotating the sample supported from the sample back surface about a rotation axis in a state where the first axis line is aligned with the rotation axis when the first curved surface is aspheric and in a state where a vertical line of a vertex of the first curved surface with the sample supported from the sample back surface is aligned with the rotation axis when the first curved surface is spheric;
scanning the sample top surface and the sample side surface using the measurement probe while changing the relative position of the measurement probe and the rotating sample and acquiring sample top and side surface shape information including shape information of the sample top surface, first shape information of the sample side surface, and relative position information of the sample top surface and the sample side surface;
setting to support the sample from the sample top surface;
rotating the sample supported from the sample top surface about the rotation axis in a state where the second axis line is aligned with the rotation axis when the second curved surface is aspheric and in a state where a vertical line of a vertex of the second curved surface with the sample supported from the sample top surface is aligned with the rotation axis when the second curved surface is spheric;
scanning the sample back surface and the sample side surface using the measurement probe while changing the relative position of the measurement probe and the rotating sample and acquiring sample back and side surface shape information including shape information of the sample back surface, second shape information of the sample side surface, and relative position information of the sample back surface and the sample side surface; and
acquiring entire sample shape information including the relative position information of the sample top surface and the sample back surface by combining the first shape information of the sample side surface from the acquiring of the sample top and side surface shape information and the second shape information of the sample side surface form the acquiring of the sample back and side surface shape information.

2. A three-dimensional shape measuring method of measuring a shape of a sample, which includes a sample top surface having a first curved surface formed in a rotated surface shape centered on a first axis line and a sample back surface having a second curved surface formed in a rotated surface shape centered on a second axis line, using a measurement probe, the method comprising:
fixing the sample to a ring-like holding jig surrounding the sample from the outside in the diameter direction of the sample without changing the relative position of the holding jig and the sample;
setting to support the sample, which the holding jig is fixed to, from the sample back surface;
rotating the sample supported from the sample back surface about a rotation axis in a state where the first axis line is aligned with the rotation axis when the first curved surface is aspheric and in a state where a vertical line of a vertex of the first curved surface with the sample supported from the sample back surface is aligned with the rotation axis when the first curved surface is spheric;
scanning the sample top surface and the outer circumferential surface of the holding jig using the measurement probe while changing the relative position of the rotating sample and the measurement probe and acquiring sample top surface and holding jig outer circumferential surface shape information including shape information of the sample top surface, first shape information of the outer circumferential surface, and relative position information of the sample top surface and the outer circumferential surface;
setting to support the sample, which the holding jig is fixed to, from the sample top surface;
rotating the sample supported from the sample top surface about the rotation axis in a state where the second axis line is aligned with the rotation axis when the second curved surface is aspheric and in a state where a vertical line of a vertex of the second curved surface with the sample supported from the sample top surface is aligned with the rotation axis when the second curved surface is spheric;
scanning the sample back surface and the outer circumferential surface of the holding jig using the measurement probe while changing the relative position of the rotating sample and the measurement probe and acquiring sample back surface and holding jig outer circumferential surface shape information including shape information of the sample back surface, second shape information of the outer circumferential surface, and relative position information of the sample back surface and the outer circumferential surface; and
calculating relative position information of the sample top surface and the sample back surface by combining the first shape information and the second shape information, and acquiring sample top and back surface shape information including the relative position information.

3. A three-dimensional shape measuring device for measuring a shape of a sample, which includes a sample top surface having a first curved surface formed in a rotated surface shape centered on a first axis line, a sample back surface having a second curved surface formed in a rotated surface shape centered on a second axis line, and a sample side surface formed in a cylindrical surface shape, using a measurement probe, the device comprising:
a sample supporting unit which supports the sample from the sample back surface or the sample top surface;
a sample rotating unit which rotates the sample supported by the sample supporting unit about a rotation axis;
a sample top surface rotation instructing unit which causes the sample rotating unit to rotate the sample supported from the sample back surface by the sample supporting unit in a state where the first axis line is aligned with the rotation axis when the first curved surface is aspheric and in a state where a vertical line of a vertex of the first curved surface with the sample supported from the sample back surface is aligned with the rotation axis when the first curved surface is spheric;
a sample top and side surface shape information acquiring unit which scans the sample top surface and the sample side surface using the measurement probe while changing the relative position of the measurement probe and the sample rotated by the sample top surface rotation instructing unit, and acquiring sample top and side surface shape information including shape information of the sample top surface, first shape information of the sample side surface, and relative position information of the sample top surface and the sample side surface;
a sample back surface rotation instructing unit which causes the sample rotating unit to rotate the sample supported from the sample top surface by the sample supporting unit in a state where the second axis line is aligned with the rotation axis when the second curved surface is aspheric and in a state where a vertical line of a vertex of the second curved surface with the sample supported from the sample top surface is aligned with the rotation axis when the second curved surface is spheric;
a sample back and side surface shape information acquiring unit which scans the sample back surface and the sample side surface using the measurement probe while changing the relative position of the measurement probe and the sample rotated by the sample back surface rotation instructing unit, and acquiring sample back and side surface shape information including shape information of the sample back surface, second shape information of the sample side surface, and relative position information of the sample back surface and the sample side surface; and
an entire sample shape information acquiring unit which acquires entire sample shape information including the relative position information of the sample top surface and the sample back surface by combining the first shape information of the sample side surface acquired by the sample top and side surface shape information acquiring unit and the second shape information of the sample side surface acquired by the sample back and side surface shape information acquiring unit.

4. The three-dimensional shape measuring device according to Claim 3, wherein the measurement probe includes an interference microscopic optical system applying low-coherence measurement light so as to be concentrated on the sample along a measurement light axis and combining the return light of the measurement light with reference light to acquire interference light, and
wherein the measurement probe includes:
an imaging unit which images an interference fringe formed by the interference light;
a relative position changing unit which changes the relative position of the interference microscopic optical system to the sample; and
a rotational position detecting unit which detects a rotational position of the sample, which is rotated by the sample rotating unit, about the rotation axis.

5. The three-dimensional shape measuring device according to Claim 4, wherein the sample top and side surface shape information acquiring unit includes:
a sample top and side surface posture adjusting unit in the interference microscopic optical system which causes the relative position changing unit to change sequentially a relative posture of the interference microscopic optical system and the sample which is rotated by the sample top surface rotation instructing unit, so that a position of an intersection point of the measurement light axis with the sample top surface is moved in the diameter direction of the sample top surface and the measurement light axis perpendicularly intersects a tangent plane of the sample top surface at the position of the intersection point every movement and so that the measurement light axis is moved on the sample side surface and a position of an intersection point of the measurement light axis with the sample side surface perpendicularly intersects a tangent plane of the sample side surface;
a sample top and side surface interference fringe acquiring unit which applies the measurement light to the sample from the interference microscopic optical system of which the relative posture is sequentially changed by the sample top and side surface posture adjusting unit, imaging a top and side surface rotational position interference fringe, which is formed by the interference of the reference light with the return light of the measurement light from the sample top surface or the sample side surface, corresponding to an area of an intersection portion of the measurement light axis and the sample top surface or the sample side surface for each of a plurality of top and side surface rotational positions of the sample, and acquiring image data of the top and side surface rotational position interference fringes; and
a sample top and side surface shape analyzing unit which acquires the sample top and side surface shape information on the basis of the top and side surface rotational position interference fringes and detection data of the rotational position by the rotational position detecting unit and adjustment data of the relative position by the sample top and side surface posture adjusting unit at the points of time of imaging the top and side surface rotational position interference fringes.

6. The three-dimensional shape measuring device according to Claim 4 or 5, wherein the sample back and side surface shape information acquiring unit includes:
a sample back and side surface posture adjusting unit in the interference microscopic optical system which causes the relative position changing unit to change sequentially a relative posture of the interference microscopic optical system and the sample which is rotated by the sample back surface rotation instructing unit, so that a position of an intersection point of the measurement light axis with the sample back surface is moved in the diameter direction of the sample back surface and the measurement light axis perpendicularly intersects a tangent plane of the sample back surface at the position of the intersection point every movement and so that the measurement light axis is moved on the sample side surface and a position of an intersection point of the measurement light axis with the sample side surface perpendicularly intersects a tangent plane of the sample side surface;
a sample back and side surface interference fringe acquiring unit which applies the measurement light to the sample from the interference microscopic optical system of which the relative posture is sequentially changed by the sample back and side surface posture adjusting unit, imaging a top and side surface rotational position interference fringe, which is formed by the interference of the reference light with the return light of the measurement light from the sample back surface or the sample side surface, corresponding to an area of an intersection portion of the measurement light axis and the sample back surface or the sample side surface for each of a plurality of back and side surface rotational positions of the sample, and acquiring image data of the back and side surface rotational position interference fringes; and
a sample back and side surface shape analyzing unit which acquires the sample back and side surface shape information on the basis of the back and side surface rotational position interference fringes and detection data of the rotational position by the rotational position detecting unit and adjustment data of the relative position by the sample back and side surface posture adjusting unit at the points of time of imaging the back and side surface rotational position interference fringes.

7. The three-dimensional shape measuring device according to any one of Claims 3 to 6, further comprising an axis misalignment analyzing unit which calculates an amount of a relative position misalignment and an amount of a relative slope misalignment of the first axis line and the second axis line on the basis of the entire sample shape information.

8. The three-dimensional shape measuring device according to any one of Claims 3 to 7, further comprising a sample side surface analyzing unit which calculates a roundness at a section of the sample side surface on the basis of the entire sample shape information.

9. The three-dimensional shape measuring device according to Claim 8, wherein the sample side surface analyzing unit calculates a cylindrical roundness of the sample side surface on the basis of the entire sample shape information.

10. A three-dimensional shape measuring device for measuring a shape of a sample, which includes a sample top surface having a first curved surface formed in a rotated surface shape centered on a first axis line and a sample back surface having a second curved surface formed in a rotated surface shape centered on a second axis line, using a measurement probe, the device comprising:
a holding jig which is formed in a ring shape surrounding the sample from the outside in the diameter direction of the sample and fixed to the sample without changing the relative position to the sample;
a sample supporting unit which supports the sample, which the holding jig is fixed to, from the sample back surface or the sample top surface;
a sample rotating unit which rotates the sample supported by the sample supporting unit about a rotation axis;
a sample top surface rotation instructing unit which causes the sample rotating unit to rotate the sample supported from the sample back surface by the sample supporting unit in a state where the first axis line is aligned with the rotation axis when the first curved surface is aspheric and in a state where a vertical line of a vertex of the first curved surface with the sample supported from the sample back surface is aligned with the rotation axis when the first curved surface is spheric;
an information acquiring unit for a sample top surface and holding jig outer circumferential surface shape which scans the sample top surface and the outer circumferential surface of the holding jig using the measurement probe while changing the relative position of the sample rotated by the sample top surface rotation instructing unit and the measurement probe, and acquiring sample top surface and holding jig outer circumferential surface shape information including shape information of the sample top surface, first shape information of the outer circumferential surface, and relative position information of the sample top surface and the outer circumferential surface;
a sample back surface rotation instructing unit which causes the sample rotating unit to rotate the sample supported from the sample top surface by the sample supporting unit in a state where the second axis line is aligned with the rotation axis when the second curved surface is aspheric and in a state where a vertical line of a vertex of the second curved surface with the sample supported from the sample top surface is aligned with the rotation axis when the second curved surface is spheric;
a sample back surface and holding jig outer circumferential surface shape information acquiring unit which scans the sample back surface and the outer circumferential surface of the holding jig using the measurement probe while changing the relative position of the sample rotated by the sample back surface rotation instructing unit and the measurement probe, and acquiring sample back surface and holding jig outer circumferential surface shape information including shape information of the sample back surface, second shape information of the outer circumferential surface, and relative position information of the sample back surface and the outer circumferential surface; and
a sample top and back surface shape information acquiring unit which calculates relative position information of the sample top surface and the sample back surface by combining the first shape information and the second shape information, and acquiring sample top and back surface shape information including the relative position information.

11. The three-dimensional shape measuring device according to Claim 10, wherein the measurement probe includes an interference microscopic optical system applying low-coherence measurement light so as to be concentrated on the sample along a measurement light axis and combining the return light of the measurement light with reference light to acquire interference light, and
wherein the measurement probe includes:
an imaging unit which images an interference fringe formed by the interference light;
a relative position changing unit which changes the relative position of the interference microscopic optical system to the sample; and
a rotational position detecting unit which detects a rotational position of the sample, which is rotated by the sample rotating unit, about the rotation axis.

12. The three-dimensional shape measuring device according to Claim 11, wherein the sample top surface and holding jig outer circumferential surface shape information acquiring unit includes:
a sample top surface and holding jig outer circumferential surface posture adjusting unit in the interference microscopic optical system which causes the relative position changing unit to change sequentially a relative posture of the interference microscopic optical system and the sample rotated by the sample top surface rotation instructing unit, so that a position of an intersection point of the measurement light axis with the sample top surface is moved in the diameter direction of the sample top surface and the measurement light axis perpendicularly intersects a tangent plane of the sample top surface at the position of the intersection point every movement and so that the measurement light axis is moved on the outer circumferential surface of the holding jig and a position of an intersection point of the measurement light axis with the outer circumferential surface perpendicularly intersects a tangent plane of the outer circumferential surface;
a sample top surface and holding jig outer circumferential surface interference fringe acquiring unit which applies the measurement light to the sample from the interference microscopic optical system of which the relative posture is sequentially changed by the sample top surface and holding jig outer circumferential surface posture adjusting unit, and causing the imaging unit to image a top surface and outer circumferential surface rotational position interference fringe, which is formed by the interference of the reference light with the return light of the measurement light from the sample top surface or the outer circumferential surface, corresponding to an area of an intersection portion of the measurement light axis and the sample top surface or the outer circumferential surface for each of a plurality of top surface and outer circumferential surface rotational positions of the sample; and
a sample top surface and holding jig outer circumferential surface shape analyzing unit which acquires the sample top surface and holding jig outer circumferential surface shape information on the basis of the top surface and outer circumferential surface rotational position interference fringes and detection data of the rotational position by the rotational position detecting unit and adjustment data of the relative position by the sample top surface and holding jig outer circumferential surface posture adjusting unit at the points of time of imaging the top surface and holding jig outer circumferential surface rotational position interference fringes.

13. The three-dimensional shape measuring device according to Claim 11 or 12, wherein the sample back surface and holding jig outer circumferential surface shape information acquiring unit includes:
a sample back surface and holding jig outer circumferential surface posture adjusting unit in the interference microscopic optical system which causing the relative position changing unit sequentially changing a relative posture of the interference microscopic optical system and the sample, which is rotated by the sample back surface rotation instructing unit, so that a position of an intersection point of the measurement light axis with the sample back surface is moved in the diameter direction of the sample back surface and the measurement light axis perpendicularly intersects a tangent plane of the sample back surface at the position of the intersection point every movement and so that the measurement light axis is moved on the outer circumferential surface of the holding jig and a position of an intersection point of the measurement light axis with the outer circumferential surface perpendicularly intersects a tangent plane of the outer circumferential surface;
a sample back surface and holding jig outer circumferential surface interference fringe acquiring unit which applies the measurement light to the sample from the interference microscopic optical system of which the relative posture is sequentially changed by the sample back surface and holding jig outer circumferential surface posture adjusting unit, and causing the imaging unit to image a back surface and outer circumferential surface rotational position interference fringe, which is formed by the interference of the reference light with the return light of the measurement light from the sample back surface or the outer circumferential surface, corresponding to an area of an intersection portion of the measurement light axis and the sample back surface or the outer circumferential surface for each of a plurality of back surface and outer circumferential surface rotational positions of the sample; and
a sample back surface and holding jig outer circumferential surface shape analyzing unit which acquires the sample back surface and holding jig outer circumferential surface shape information on the basis of the back surface and outer circumferential surface rotational position interference fringes and detection data of the rotational position by the rotational position detecting unit and adjustment data of the relative position by the sample back surface and holding jig outer circumferential surface posture adjusting unit at the points of time of imaging the back surface and holding jig outer circumferential surface rotational position interference fringes.

14. The three-dimensional shape measuring device according to any one of Claims 10 to 13, further comprising an axis misalignment analyzing unit which calculates an amount of relative position misalignment and an amount of relative slope misalignment of the first axis line and the second axis line on the basis of the sample top and back surface shape information.

15. The three-dimensional shape measuring device according to any one of Claims 4 to 9 and Claims 11 to 13, wherein the imaging unit includes a one-dimensional image sensor as an imaging device.

16. The three-dimensional shape measuring device according to any one of Claims 4 to 9 and Claims 11 to 15, wherein the relative position changing unit includes a tilting unit which tilts the interference microscopic optical system in a space.
